# EUROPÄISCHE PATENTSCHRIFT

(11) **EP 4 083 480 B1**
(45) Veröffentlichungstag und Bekanntmachung des Hinweises auf die Patenterteilung: **20.08.2025**
(21) Anmeldenummer: 22165436.1
(22) Anmeldetag: 30.03.2022
(51) Int. Cl.: F16K 11/085, F16K 5/04, F16K 27/06, B60H 1/00, B60K 11/02

(54) **FLUIDVENTILANORDNUNG**
FLUID VALVE ASSEMBLY
SYSTEME DE SOUPAPE DE FLUIDE

(30) Priorität: 08.04.2021 DE 102021108799
(43) Veröffentlichungstag der Anmeldung: 02.11.2022
(73) Patentinhaber: HDT Veritas Hessen GmbH, 63571 Gelnhausen (DE)
(72) Erfinder: HATTASS, Dirk, 63584 Gruendau (DE); GEESMANN, Urs, 63571 Gelnhausen (DE); GRASMUECK, Thomas, 63549 Ronneburg (DE); BERGMANN, Stefan, 63755 Alzenau (DE); BRUNETTI, Claudio, 63579 Freigericht (DE)
(74) Vertreter: Patentship Patentanwaltsgesellschaft mbH

(56) Entgegenhaltungen:
- WO-A1-2020/143550
- WO-A1-2021/048095
- DE-A1- 10 219 577
- DE-A1- 102019 134 841
- DE-U1- 202017 000 564
- US-A- 2 578 396
- US-A1- 2015 075 452
- US-A1- 2019 039 440
- US-A1- 2020 149 462
- US-B2- 10 494 983

## Beschreibung

Die vorliegende Erfindung betrifft ein Fluidventilanordnung.

Herkömmliche Fluidventilanordnungen dienen zum Verbinden von Fluidleitungen in einer Vielzahl von fluidführenden Systemen, insbesondere in fluidführenden Systemen eines Fahrzeuges. In fluidführenden Systemen eines Fahrzeuges werden unterschiedliche Fluide, wie z.B. Gase oder Flüssigkeiten, teilweise unter hohem Druck und bei hohen Temperaturen geleitet. Aufgrund der beengten Bauraumsituation in einem Fahrzeug müssen verschiedene Leitungen der entsprechenden fluidführenden Systeme oftmals durch entsprechende Fluidventilanordnungen miteinander verbunden werden, um eine wirksame Fluidleitung zu bewirken. Hierbei werden an die Fluidventilanordnungen entsprechend hohe Anforderungen in Bezug auf Stabilität und Fluiddichtigkeit gestellt.

Herkömmliche Fluidventilanordnungen bestehen oftmals aus einer Vielzahl von unterschiedlichen Bauteilen, welche oftmals mit einem hohen Montageaufwand zusammengebaut werden müssen, und damit oftmals hohe Herstellungs- und Fertigungskosten aufweisen.

Die Druckschrift DE 20 2017 000 564 U1 offenbart eine Fluidventilanordnung gemäß dem Oberbegriff des Anspruchs 1.

Die Druckschrift US 2 578 396 offenbart ein Ventil und eine Dichtungsstruktur für das Ventil. Die Druckschrift US 10 494 983 B2 offenbart ein Ventil.

Es ist die der Erfindung zugrundeliegende Aufgabe, eine Fluidventilanordnung anzugeben, welche vorteilhafte Eigenschaften aufweist und einfach zu fertigen ist.

Diese Aufgabe wird durch die Gegenstände mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch eine Fluidventilanordnung gelöst, umfassend ein Ventilgehäuse, welches einen Gehäuseinnenraum begrenzt, wobei das Ventilgehäuse zumindest zwei Gehäuseöffnungen aufweist, welche jeweils den Gehäuseinnenraum mit einem Außenraum der Fluidventilanordnung fluidtechnisch verbinden, wobei die jeweilige Gehäuseöffnung jeweils durch einen Öffnungsrand des Ventilgehäuses begrenzt wird, einen Ventilkolben, welcher drehbar in dem Gehäuseinnenraum angeordnet und ausgebildet ist, die zumindest zwei Gehäuseöffnungen in Abhängigkeit einer Kolbenstellung des Ventilkolbens zumindest teilweise fluidtechnisch zu sperren oder zumindest teilweise fluidtechnisch freizugeben, und zumindest zwei Dichtungsanordnungen, wobei jeweils eine der zumindest zwei Dichtungsanordnungen in jeweils einer der zumindest zwei Gehäuseöffnungen angeordnet ist, wobei die Dichtungsanordnungen jeweils ein hülsenförmiges Befestigungselement und ein ringförmiges Dichtungselement aufweisen, wobei das jeweilige hülsenförmige Befestigungselement mit dem jeweiligen Öffnungsrand des Ventilgehäuses formschlüssig oder kraftschlüssig verbunden ist, und wobei das jeweilige hülsenförmige Befestigungselement ausgebildet ist, das jeweilige ringförmige Dichtungselement mit einer Kraft zu beaufschlagen, um das jeweilige ringförmige Dichtungselement an den jeweiligen Öffnungsrand des Ventilgehäuses und an den Ventilkolben zu pressen und eine fluidtechnische Abdichtung zwischen dem Ventilkolben und dem jeweiligen Öffnungsrand zu bewirken.

Dadurch wird beispielsweise der technische Vorteil erreicht, dass die Dichtungsanordnung durch das hülsenförmige Befestigungselement an dem jeweiligen Öffnungsrand befestigt werden kann, und dass das an dem Öffnungsrand befestigte hülsenförmige Befestigungselement zudem die für eine wirksame fluidtechnische Abdichtung erforderliche Presskraft auf das ringförmige Dichtungselement ausübt.

Dadurch kann eine optimale Vorspannung auf das ringförmige Dichtungselement ausgeübt werden, wodurch sich eine Reduzierung von Toleranzketten ergibt, insbesondere deshalb, da das hülsenförmige Befestigungselement formschlüssig oder kraftschlüssig an dem jeweiligen Öffnungsrand befestigt ist und somit nicht mit dem jeweiligen Öffnungsrand verschweißt ist.

Zudem wird der Vorteil erreicht, dass die Dichtungsanordnung gemäß der vorliegenden Offenbarung nur aus zwei Bauteilen besteht, da das hülsenförmige Befestigungselement nicht nur die formschlüssige oder kraftschlüssige Befestigung an dem jeweiligen Öffnungsrand bewirkt, sondern durch die auf das ringförmige Dichtungselement ausgeübte Presskraft auch für die fluidtechnische Abdichtung sorgt. Dies verringert die Komplexität der Dichtungsanordnung, und spart Kosten bei den Bauteilen und bei der Montage. Zudem stellt die formschlüssige oder kraftschlüssige Befestigung des hülsenförmigen Befestigungselements an dem jeweiligen Öffnungsrand insbesondere eine wirksame Positionierung der jeweiligen Dichtungsanordnung in der jeweiligen Gehäuseöffnung sicher.

Falls zudem jeweils ein Gehäusestutzen an der jeweiligen Gehäuseöffnung an das Ventilgehäuse angeschweißt werden soll, stellt die Dichtungsanordnung gemäß der vorliegenden Offenbarung sicher, dass keine Belastung der Schweißnaht auftritt, da die formschlüssige oder kraftschlüssige Verbindung zwischen dem hülsenförmigen Befestigungselement und dem Öffnungsrand entsprechend auftretende Kräfte aufnimmt.

Die Fluidventilanordnung umfasst insbesondere eine Mehrwege-Fluidventilanordnung, welche zumindest zwei Gehäuseöffnungen, insbesondere eine Mehrzahl von Gehäuseöffnungen, insbesondere zwei, drei, vier, fünf, sechs, sieben, acht, neun oder zehn Gehäuseöffnungen aufweist.

Der Ventilkolben der Fluidventilanordnung, insbesondere der Mehrwege-Fluidventilanordnung, ist drehbar in dem Gehäuseinnenraum angeordnet und kann, insbesondere durch einen Elektromotor der Fluidventilanordnung, in unterschiedliche Kolbenstellungen gedreht werden.

Der Ventilkolben der Fluidventilanordnung weist hierbei insbesondere einen Fluidkanal auf, welcher ausgebildet ist in Abhängigkeit der Kolbenstellung des Ventilkolbens die zumindest zwei Gehäuseöffnungen zumindest teilweise fluidtechnisch zu sperren oder zumindest teilweise fluidtechnisch freizugeben.

Eine zumindest teilweise fluidtechnische Freigabe von jeweils zwei der zumindest zwei Gehäuseöffnungen kann durch den Ventilkolben insbesondere dadurch erreicht werden, dass die jeweiligen zwei Gehäuseöffnungen durch den Fluidkanal des Ventilkolbens miteinander zumindest teilweise fluidtechnisch verbunden werden. Eine zumindest teilweise fluidtechnische Freigabe umfasst eine vollständige oder teilweise Freigabe der jeweiligen Gehäuseöffnungen durch den Ventilkolben, insbesondere durch den Fluidkanal des Ventilkolbens.

Ein zumindest teilweise fluidtechnisches Sperren von jeweils zwei der zumindest zwei Gehäuseöffnungen kann durch den Ventilkolben insbesondere dadurch erreicht werden, dass die zumindest zwei Gehäuseöffnungen durch den Ventilkolben fluidtechnisch zumindest teilweise voneinander getrennt werden. Ein zumindest teilweises fluidtechnisches Sperren umfasst ein vollständiges oder teilweises Sperren der jeweiligen Gehäuseöffnungen durch den Ventilkolben.

Wenn das Ventilgehäuse jedoch mehr als zwei, insbesondere vier, sechs, acht, oder zehn Gehäuseöffnungen aufweist, kann der Ventilkolben in einer Kolbenstellung des Ventilkolbens eine erste Untergruppe von jeweils zwei Gehäuseöffnungen der mehr als zwei Gehäuseöffnungen zumindest teilweise fluidtechnisch sperren und eine zweite Untergruppe von jeweils zwei Gehäuseöffnungen der mehr als zwei Gehäuseöffnungen zumindest teilweise fluidtechnisch freigeben, bzw. kann der Ventilkolben in einer anderen Kolbenstellung des Ventilkolbens die erste Untergruppe von jeweils zwei Gehäuseöffnungen der mehr als zwei Gehäuseöffnungen zumindest teilweise fluidtechnisch freigeben und die zweite Untergruppe von jeweils zwei Gehäuseöffnungen der mehr als zwei Gehäuseöffnungen zumindest teilweise fluidtechnisch sperren.

Eine entsprechend fluidtechnische Ventilschaltung wird im Nachfolgenden für eine Vier-Wege-Fluidventilanordnung erläutert.

Insbesondere weist die Fluidventilanordnung einen Gehäusedeckel auf, welcher an dem Ventilgehäuse befestigt ist. Insbesondere ist der Gehäusedeckel als ein das Ventilgehäuse zumindest abschnittsweise, insbesondere vollständig umlaufender Gehäusedeckel ausgebildet.

Insbesondere weist der Gehäusedeckel einen Deckeloberbereich auf, welcher an einer Oberseite des Ventilgehäuses anliegt, wobei sich insbesondere zumindest zwei Deckelabschnitte von dem Deckeloberbereich aus erstrecken. Jeweils einer der zumindest zwei Deckelabschnitte liegt insbesondere jeweils an einer Lateralseite von zumindest zwei Lateralseiten des Ventilgehäuses an. Jeweils einer der zumindest zwei Deckelabschnitte liegt jeweils an einem Gehäusestutzen von zumindest zwei Gehäusestutzen an, wobei insbesondere jeweils einer der zumindest zwei Gehäusestutzen an jeweils einer der zumindest zwei Gehäuseöffnungen angeordnet ist.

Somit greifen die zumindest zwei Deckelabschnitte des Gehäusedeckels über die jeweiligen Lateralseiten des Ventilgehäuses über und fixieren dabei die an den jeweiligen Gehäuseöffnungen angeordneten Gehäusestutzen an dem Ventilgehäuse, bzw. pressen die an den jeweiligen Gehäuseöffnungen angeordneten Gehäusestutzen in die jeweilige Gehäuseöffnung.

Insbesondere ist jeweils eine der der zumindest zwei Gehäuseöffnungen an jeweils einer von zwei gegenüberliegenden Lateralseiten des Ventilgehäuses angeordnet und ist insbesondere jeweils einer der zumindest zwei Deckelabschnitte an den jeweils einer der gegenüberliegenden Lateralseiten des Ventilgehäuses angeordnet.

Insbesondere sind die zumindest zwei Deckelabschnitte einstückig mit dem Gehäusedeckel gebildet. Insbesondere sind die zumindest zwei Deckelabschnitte einstückig mit dem Deckeloberbereich des Gehäusedeckels gebildet.

Insbesondere kann das Ventilgehäuse, insbesondere in einer Oberseite des Ventilgehäuses, eine Deckelöffnung aufweisen, durch welche der Ventilkolben in das Ventilgehäuse eingebracht werden kann. Der Gehäusedeckel, insbesondere der Deckeloberbereich des Gehäusedeckels, verschließt hierbei insbesondere die Deckelöffnung. Insbesondere weist das Ventilgehäuse eine obere Abschlussplatte auf, welche an dem Deckeloberbereich des Gehäusedeckels angeordnet ist, und mit dem Gehäusedeckel und/oder dem Gehäusestutzen verschweißt ist.

Alternativ kann das Ventilgehäuse, insbesondere in einer Unterseite des Ventilgehäuses, eine Bodenöffnung aufweisen, durch welche der Ventilkolben in das Ventilgehäuse eingebracht werden kann.

Insbesondere weist der Ventilkolben einen Antriebsschaft auf, welcher durch einen Kolbenantrieb, insbesondere Elektromotor, drehbar ist. Insbesondere erstreckt sich der Antriebsschaft durch die Deckelöffnung des Ventilgehäuses und durch eine Gehäusedeckelöffnung des Gehäusedeckels. Alternativ erstreckt sich der Antriebsschaft durch eine der Deckelöffnung abgewandte Bodenöffnung des Ventilgehäuses, und ermöglicht somit eine Anordnung des Kolbenantriebs, insbesondere Elektromotor, an der Unterseite des Ventilgehäuses.

Insbesondere ist der Gehäusedeckel nicht lösbar, insbesondere verschweißt, an dem Ventilgehäuse befestigt. Insbesondere ist der Gehäusedeckel lösbar, insbesondere kraftschlüssig, insbesondere durch eine Rastverbindung oder durch eine Clipverbindung, und/oder formschlüssig an dem Ventilgehäuse befestigt.

Die insbesondere lösbare Verbindung zwischen dem Gehäusedeckel und dem Ventilgehäuse ist insbesondere dadurch gekennzeichnet, dass die lösbare Verbindung ohne Beschädigung des Gehäusedeckels und das Ventilgehäuses gelöst werden kann, um den Gehäusedeckel von dem Ventilgehäuse zu entfernen, beispielsweise bei einer Demontage der Fluidventilanordnung. Beispielsweise kann die lösbare Verbindung zwischen dem Gehäusedeckel und dem Ventilgehäuse durch zumindest einen Rastarm des jeweiligen Gehäusedeckels realisiert werden, welcher in eine entsprechende Rastaufnahme des Ventilgehäuses eingreift.

Die Verbindung zwischen dem jeweiligen hülsenförmigen Befestigungselement und dem jeweiligen Öffnungsrand ist eine formschlüssige oder kraftschlüssige Verbindung.

Die formschlüssige oder kraftschlüssige Verbindung zwischen dem jeweiligen hülsenförmigen Befestigungselement und dem jeweiligen Öffnungsrand ist insbesondere dadurch gekennzeichnet, dass die formschlüssige oder kraftschlüssige Verbindung ohne Beschädigung des hülsenförmigen Befestigungselements und des jeweiligen Öffnungsrands gelöst werden kann, um das jeweilige hülsenförmige Befestigungselement von dem jeweiligen Öffnungsrand zu entfernen, beispielsweise bei einer Demontage der Fluidventilanordnung, wenn zuvor ein optional vorhandener Gehäusedeckel entfernt worden ist. Beispielsweise kann die formschlüssige oder kraftschlüssige Verbindung zwischen dem jeweiligen hülsenförmigen Befestigungselement und dem jeweiligen Öffnungsrand durch zumindest einen Rastarm des jeweiligen hülsenförmigen Befestigungselements realisiert werden, welcher in eine entsprechende Rastaufnahme des Öffnungsrands eingreift.

Insbesondere besteht das ringförmige Dichtungselement aus einem Zwei-Komponenten-Kunststoff, insbesondere aus einer Mischung aus einem Elastomer, insbesondere Ethylen-Propylen-Dien-Kautschuk (EPDM) oder Ethylen-Acrylat-Kautschuk (AEM), und einem Thermoplast, insbesondere Polytetrafluorethylen (PTFE).

Insbesondere ist das ringförmige Dichtungselement an einer dem Gehäuseinnenraum zugewandten Seite der jeweiligen Dichtungsanordnung angeordnet. Insbesondere ist das hülsenförmige Befestigungselement an einer dem Gehäuseinnenraum abgewandten Seite der jeweiligen Dichtungsanordnung angeordnet.

In einer vorteilhaften Ausführungsform weist das Ventilgehäuse vier Gehäuseöffnungen auf, wobei der Ventilkolben ausgebildet ist in einer ersten Kolbenstellung eine erste Untergruppe von jeweils zwei Gehäuseöffnungen der vier Gehäuseöffnungen zumindest teilweise fluidtechnisch zu sperren und eine zweite Untergruppe von jeweils zwei Gehäuseöffnungen der vier Gehäuseöffnungen zumindest teilweise fluidtechnisch freizugeben, und wobei der Ventilkolben ausgebildet ist in einer zweiten Kolbenstellung die zweite Untergruppe von jeweils zwei Gehäuseöffnungen der vier Gehäuseöffnungen zumindest teilweise fluidtechnisch zu sperren und die erste Untergruppe von jeweils zwei Gehäuseöffnungen der vier Gehäuseöffnungen zumindest teilweise fluidtechnisch freizugeben, wobei die Fluidventilanordnung vier Dichtungsanordnungen aufweist, welche jeweils in einer der vier Gehäuseöffnungen angeordnet sind.

Dadurch wird der technische Vorteil erreicht, dass eine wirksame Vier-Wege-Fluidventilanordnung bereitgestellt wird.

Der Ventilkolben ist hierbei zwischen der ersten und zweiten Kolbenstellung drehbar.

In der ersten Kolbenstellung gibt der Ventilkolben, insbesondere ein Fluidkanal des Ventilkolbens, jeweils zwei der vier Gehäuseöffnungen zumindest teilweise fluidtechnisch frei, insbesondere eine erste und zweite Gehäuseöffnung (Alternative 1), eine erste und dritte Gehäuseöffnung (Alternative 2), oder eine erste und vierte Gehäuseöffnung (Alternative 3), und sperrt der Ventilkolben die beiden anderen der vier Gehäuseöffnungen zumindest teilweise fluidtechnisch, insbesondere die dritte und vierte Gehäuseöffnung (Alternative 1), die zweite und vierte Gehäuseöffnung (Alternative 2), oder die zweite und dritte Gehäuseöffnung (Alternative 3).

In der zweiten Kolbenstellung gibt der Ventilkolben, insbesondere ein Fluidkanal des Ventilkolbens, die beiden anderen der vier Gehäuseöffnungen zumindest teilweise fluidtechnisch frei, insbesondere die dritte und vierte Gehäuseöffnung (Alternative 1), die zweite und vierte Gehäuseöffnung (Alternative 2), oder die zweite und dritte Gehäuseöffnung (Alternative 3), und sperrt der Ventilkolben die zwei der vier Gehäuseöffnungen zumindest teilweise fluidtechnisch, insbesondere die erste und zweite Gehäuseöffnung (Alternative 1), die erste und dritte Gehäuseöffnung (Alternative 2), oder die erste und vierte Gehäuseöffnung (Alternative 3).

Somit werden in Abhängigkeit der Kolbenstellung des drehbaren Ventilkolbens jeweils zwei der vier Gehäuseöffnungen zumindest teilweise fluidtechnisch gesperrt oder zumindest teilweise fluidtechnisch freigegeben.

Insbesondere sind die erste und vierte Gehäuseöffnung, sowie die zwei und dritte Gehäuseöffnung jeweils gegenüberliegend in dem Ventilgehäuse angeordnet. Insbesondere erstreckt sich ein Fluidkanal des Ventilkolbens gerade durch den Ventilkolben, wodurch in Abhängigkeit der Kolbenstellung des drehbaren Ventilkolbens die jeweils gegenüberliegende erste und vierte, bzw. zweite und dritte Gehäuseöffnung entweder zumindest teilweise fluidtechnisch freigegeben oder zumindest teilweise fluidtechnisch gesperrt werden.

Alternativ erstreckt sich der Fluidkanal insbesondere winklig in dem Ventilkolben, wodurch in Abhängigkeit der Kolbenstellung des drehbaren Ventilkolbens die jeweils benachbarte erste und zweite Gehäuseöffnung, oder die benachbarte erste und dritte Gehäuseöffnung, oder die benachbarte zweite und vierte Gehäuseöffnung zumindest teilweise fluidtechnisch gesperrt oder zumindest teilweise fluidtechnisch freigegeben werden kann.

Dadurch, dass in jeder der vier Gehäuseöffnungen jeweils eine Dichtungsanordnung angeordnet ist, kann eine wirksame fluidtechnische Abdichtung für alle Gehäuseöffnungen sichergestellt werden.

Bei vier Gehäuseöffnungen weist der insbesondere an dem Ventilgehäuse befestigte Gehäusedeckel vier Deckelabschnitte auf, wobei insbesondere jeweils einer der Deckelabschnitte an jeweils einer der vier Gehäuseöffnungen angeordnet ist, und wobei insbesondere jeweils einer der Deckelabschnitte an jeweils einem von vier Gehäusestutzen der Fluidventilanordnung anliegt, welcher an der jeweiligen Gehäuseöffnung angeordnet ist.

In einer vorteilhaften Ausführungsform weist die Fluidventilanordnung zumindest zwei, insbesondere vier, Gehäusestutzen auf, wobei jeweils einer der zumindest zwei, insbesondere vier, Gehäusestutzen an jeweils einer der zumindest zwei, insbesondere vier, Gehäuseöffnungen angeordnet ist, wobei die jeweiligen Gehäusestutzen durch eine kraftschlüssige oder formschlüssige Verbindung, mit dem jeweiligen Öffnungsrand verbunden sind oder wobei die jeweiligen Gehäusestutzen durch eine stoffschlüssige Verbindung mit dem jeweiligen Öffnungsrand verbunden sind.

Dadurch wird der technische Vorteil erreicht, dass die Gehäusestutzen eine wirksame fluidtechnische Anbindung der jeweiligen Gehäuseöffnung an eine Fluidleitung und/oder an ein Fluidverteilungselement ermöglichen.

Insbesondere weisen die Gehäusestutzen jeweils einen Stutzeninnenabschnitt auf, welcher in der jeweiligen Gehäuseöffnung angeordnet ist und an der jeweiligen Dichtungsanordnung, insbesondere an dem jeweiligen hülsenförmigen Befestigungselement anliegt. Insbesondere weisen die Gehäusestutzen jeweils einen Stutzenaußenabschnitt auf, welcher außerhalb der jeweiligen Gehäuseöffnung angeordnet ist, wobei sich der Stutzenaußenabschnitt insbesondere zumindest abschnittsweise parallel oder zumindest abschnittsweise winklig, insbesondere rechtwinklig, zu der Gehäuseöffnung erstreckt. Der Stutzenaußenabschnitt dient insbesondere zur fluidtechnischen Anbindung an eine Fluidleitung und/oder an ein Fluidverteilungselement.

Insbesondere ist zwischen dem jeweiligen Stutzeninnenabschnitt und dem jeweiligen Öffnungsrand ein weiteres Dichtungselement, insbesondere ein Dichtungsring, angeordnet, welcher eine fluidtechnische Abdichtung zwischen dem jeweiligen Öffnungsrand und dem jeweiligen Stutzeninnenabschnitt sicherstellt.

Insbesondere weist ein Gehäusedeckel der Fluidventilanordnung zumindest zwei, insbesondere vier Deckelabschnitte auf, wobei jeweils ein Deckelabschnitt der zumindest zwei, insbesondere vier Deckelabschnitte, an jeweils einem der zumindest zwei, insbesondere vier, Gehäusestutzen anliegt, insbesondere an einer Stutzenaußenseite des jeweiligen Stutzeninnenabschnitts anliegt. Die Stutzenaußenseite des jeweiligen Stutzeninnenabschnitts ist hierbei einem Außenraum des Ventilgehäuses zugewandt. Der Gehäusedeckel ist insbesondere lösbar, insbesondere kraftschlüssig oder formschlüssig, oder nicht lösbar, insbesondere stoffschlüssig, mit der Stutzenaußenseite des jeweiligen Stutzeninnenabschnitts verbunden.

In einer vorteilhaften Ausführungsform umfasst die formschlüssige oder kraftschlüssige Verbindung zwischen dem jeweiligen hülsenförmigen Befestigungselement der jeweiligen Dichtungsanordnung mit dem jeweiligen Öffnungsrand des Ventilgehäuses eine Rastverbindung.

Dadurch wird der technische Vorteil erreicht, dass durch eine Rastverbindung in einer entsprechenden Festlegestellung eine wirksame Befestigung des jeweiligen hülsenförmigen Befestigungselements an dem jeweiligen Öffnungsrand des Ventilgehäuses bewirkt wird, bzw. in einer entsprechenden Lösestellung, insbesondere durch ein Spreizen des Rastarms, das jeweilige hülsenförmige Befestigungselement wirksam von dem jeweiligen Öffnungsrand gelöst werden kann.

In einer vorteilhaften Ausführungsform weist das jeweilige hülsenförmige Befestigungselement eine Hülsenaußenseite auf, welche an einer der jeweiligen Gehäuseöffnung zugewandten Randinnenseite des jeweiligen Öffnungsrands anliegt, insbesondere formschlüssig oder kraftschlüssig anliegt.

Dadurch wird der technische Vorteil erreicht, dass durch die an der Randinnenseite des jeweiligen Öffnungsrands anliegende Hülsenaußenseite eine vorteilhafte und stabile Befestigung des jeweiligen hülsenförmigen Befestigungselements an dem jeweiligen Öffnungsrand sichergestellt wird.

In einer vorteilhaften Ausführungsform weist das jeweilige hülsenförmige Befestigungselement, insbesondere die Hülsenaußenseite, zumindest zwei Rastarme, insbesondere drei Rastarme, auf, welche jeweils in eine Rastaufnahme des jeweiligen Öffnungsrands, insbesondere einer Randinnenseite, eingreifen, um das jeweilige hülsenförmige Befestigungselement kraftschlüssig an dem jeweiligen Öffnungsrand zu befestigen, oder weist der jeweiligen Öffnungsrand, insbesondere eine Randinnenseite, zumindest zwei Rastarme, insbesondere drei Rastarme, auf, welche jeweils in eine Rastaufnahme des jeweiligen hülsenförmigen Befestigungselements eingreifen, um das jeweilige hülsenförmige Befestigungselement kraftschlüssig an dem jeweiligen Öffnungsrand zu befestigen.

Dadurch wird der technische Vorteil erreicht, dass durch das Eingreifen der entweder an dem jeweiligen Öffnungsrand oder an dem hülsenförmigen Befestigungselement angeordneten Rastarme in die entsprechende entweder an dem hülsenförmigen Befestigungselement oder an dem jeweiligen Öffnungsrand angeordnete Rastaufnahme, eine wirksame kraftschlüssige Verbindung zwischen dem jeweiligen hülsenförmigen Befestigungselement und dem jeweiligen Öffnungsrand erreicht werden kann.

Insbesondere sind die Rastarme federelastisch ausgebildet. Insbesondere weisen die Rastarme an einem Ende jeweils einen Rastvorsprung auf, welcher ausgebildet ist, in die Rastaufnahme einzugreifen.

Insbesondere liegt der zumindest eine Gehäusedeckel, insbesondere der Stutzeninnenabschnitt, an dem jeweiligen Rastarm an, insbesondere an einer dem jeweiligen Öffnungsrand abgewandten Seite des jeweiligen Rastarms an, um ein Ausfedern des jeweiligen Rastarms aus der jeweiligen Rastaufnahme zu verhindern.

Dadurch wird der technische Vorteil erreicht, dass eine wirksame Verspannung zwischen dem Gehäusedeckel und dem jeweiligen Rastarm erreicht wird, um eine wirksame Kraftübertragung von dem Gehäusedeckel über den jeweiligen Rastarm auf das jeweilige ringförmige Dichtungselement zu erreichen.

Erfindungsgemäß weist das jeweilige hülsenförmige Befestigungselement einen inneren Hülsenabschnitt, welcher einen Hülsendurchbruch des jeweiligen hülsenförmigen Befestigungselements begrenzt, und einen äußeren Hülsenabschnitt, welcher mit dem jeweiligen Öffnungsrand des Ventilgehäuses formschlüssig oder kraftschlüssig verbunden ist, auf, wobei zwischen dem inneren Hülsenabschnitt und dem äußeren Hülsenabschnitt ein dem Gehäuseinnenraum des Ventilgehäuses zugewandter Aufnahmebereich angeordnet ist, in welchem das jeweilige ringförmige Dichtungselement zumindest abschnittsweise aufgenommen ist.

Dadurch wird der technische Vorteil erreicht, dass der innere Hülsenabschnitt den Hülsendurchbruch zum Leiten des Fluids vorteilhaft begrenzt, und dass der äußere Hülsenabschnitt eine wirksame Verbindung mit dem jeweiligen Öffnungsrand des Ventilgehäuses sichergestellt.

Insbesondere liegt der innere Hülsenabschnitt bündig an dem jeweiligen Gehäusestutzen, insbesondere an dem Stutzeninnenabschnitt des jeweiligen Gehäusestutzens, an.

Der insbesondere vorhandene Aufnahmebereich, in welchem das jeweilige ringförmige Dichtungselement zumindest abschnittsweise aufgenommen ist, wird insbesondere durch den inneren Hülsenabschnitt, insbesondere einem inneren Hülsenvorsprung, welcher dem Gehäuseinnenraum des Ventilgehäuses zugewandt ist, begrenzt, wobei das ringförmige Dichtungselement zumindest abschnittsweise an dem inneren Hülsenabschnitt, insbesondere dem inneren Hülsenvorsprung, anliegt.

Der insbesondere vorhandene Aufnahmebereich, in welchem das jeweilige ringförmige Dichtungselement zumindest abschnittsweise aufgenommen ist, wird insbesondere durch den äußeren Hülsenabschnitt, insbesondere einem Anlegeabschnitt, welcher sich winklig von dem inneren Hülsenabschnitt erstreckt, begrenzt, wobei das ringförmige Dichtungselement zumindest abschnittsweise an dem Anlegeabschnitt anliegt.

Der insbesondere vorhandene Aufnahmebereich, in welchem das jeweilige ringförmige Dichtungselement zumindest abschnittsweise aufgenommen ist, wird insbesondere durch einen Befestigungsanschlag des Öffnungsrands begrenzt, wobei das ringförmige Dichtungselement zumindest abschnittsweise an dem äußeren Hülsenabschnitt, insbesondere an dem Befestigungsanschlag anliegt.

In einer vorteilhaften Ausführungsform weist das jeweilige ringförmige Dichtungselement eine erste Dichtungslippe auf, welche an dem jeweiligen hülsenförmigen Befestigungselement, insbesondere dem äußeren Hülsenabschnitt, und an dem jeweiligen Öffnungsrand, insbesondere Befestigungsanschlag dichtend anliegt, und/oder weist das jeweilige ringförmige Dichtungselement eine zweite Dichtungslippe auf, welche an dem jeweiligen hülsenförmigen Befestigungselement, insbesondere dem inneren Hülsenabschnitt und dem äußeren Hülsenabschnitt, dichtend anliegt, und/oder weist das jeweilige ringförmige Dichtungselement eine dritte Dichtungslippe auf, welche an dem Ventilkolben dichtend anliegt.

Insbesondere liegt die erste Dichtungslippe an dem Befestigungsanschlag des jeweiligen Öffnungsrands und an einem sich winklig von dem inneren Hülsenabschnitt erstreckenden Anlegeabschnitt des äußeren Hülsenabschnitts an.

Insbesondere liegt die zweite Dichtungslippe an dem inneren Hülsenvorsprung des inneren Hülsenabschnitts und an einem sich winklig von dem inneren Hülsenabschnitt erstreckenden Anlegeabschnitt des äußeren Hülsenabschnitts an.

In einer vorteilhaften Ausführungsform ist in dem jeweiligen hülsenförmigen Befestigungselement, insbesondere in dem inneren Hülsenabschnitt zumindest eine erste Durchflutungsöffnung gebildet, und ist in dem jeweiligen hülsenförmigen Befestigungselement, insbesondere in dem äußeren Hülsenabschnitt zumindest eine zweite Durchflutungsöffnung gebildet, wobei die erste und zweite Durchflutungsöffnung einen Hülsendurchbruch des hülsenförmigen Befestigungselements mit einem durch das jeweilige ringförmige Dichtungselement einseitig abgetrennten Dichtungsraum fluidtechnisch verbinden, um den einseitig abgetrennten Dichtungsraum mit Fluid zu beschicken und eine Anpresskraft auf das jeweilige ringförmige Dichtungselement zu bewirken.

Dadurch wird der technische Vorteil erreicht, dass durch den Hülsendurchbruch strömendes Fluid durch die erste und zweite Durchflutungsöffnung in den Dichtungsraum strömen kann, welcher durch das jeweilige ringförmige Dichtungselement einseitig abgetrennt ist, um somit das jeweilige ringförmige Dichtungselement mit einer Anpresskraft zu beaufschlagen, wodurch die Dichtungswirkung zwischen dem jeweiligen ringförmigen Dichtungselement und dem Ventilkolben, sowie dem jeweiligen Öffnungsrand verbessert werden kann.

Insbesondere ist die erste Durchflutungsöffnung in einem dem jeweiligen Gehäusestutzen zugewandten Bereich des inneren Hülsenabschnitts des jeweiligen hülsenförmigen Befestigungselements gebildet.

Insbesondere ist die zweite Durchflutungsöffnung in einem sich winklig von dem inneren Hülsenabschnitt erstreckenden Anlegeabschnitt des äußeren Hülsenabschnitts des jeweiligen hülsenförmigen Befestigungselements gebildet.

Insbesondere wird der einseitig abgetrennte Dichtungsraum durch die erste, zweite und dritte Dichtungslippe des jeweiligen ringförmigen Dichtungselements einseitig abgetrennt.

Insbesondere umfasst die zumindest eine erste Durchflutungsöffnung eine einzige erste Durchflutungsöffnung oder eine Mehrzahl von ersten Durchflutungsöffnungen.

Insbesondere umfasst die zumindest eine zweite Durchflutungsöffnung eine einzige zweite Durchflutungsöffnung oder eine Mehrzahl von zweiten Durchflutungsöffnungen.

In einer vorteilhaften Ausführungsform ist das jeweilige ringförmige Dichtungselement mit dem jeweiligen hülsenförmigen Befestigungselement durch eine kraftschlüssige und/oder formschlüssige Verbindung verbunden, oder ist das jeweilige ringförmige Dichtungselement mit dem jeweiligen hülsenförmigen Befestigungselement durch eine stoffschlüssige Verbindung verbunden.

Dadurch wird der technische Vorteil erreicht, dass eine wirksame Befestigung des jeweiligen ringförmigen Dichtungselements mit dem jeweiligen hülsenförmigen Befestigungselement erreicht wird. Die insbesondere kraftschlüssige und/oder formschlüssige Befestigung zwischen dem hülsenförmigen Befestigungselement und dem ringförmigen Dichtungselement kann insbesondere durch einen Pressdruck eines Gehäusedeckels auf einen Gehäusestutzen der Fluidventilanordnung sichergestellt werden, wobei der Pressdruck durch das an dem Gehäusestutzen anliegende hülsenförmige Befestigungselement an das ringförmige Dichtungselement weitergeleitet wird.

In einer vorteilhaften Ausführungsform weist der jeweilige Öffnungsrand zumindest einen Befestigungsanschlag auf, an welchem das jeweilige ringförmige Dichtungselement, insbesondere die erste Dichtungslippe dichtend anliegt, um eine fluidtechnisch dichtende Verbindung zwischen dem jeweiligen ringförmigen Dichtungselement und dem jeweiligen Öffnungsrand des Ventilgehäuses zu bewirken.

Dadurch wird der technische Vorteil erreicht, dass der Befestigungsanschlag des jeweiligen Öffnungsrands eine wirksame Verschiebebegrenzung für das jeweilige ringförmige Dichtungselement sicherzustellen. Somit ist das jeweilige ringförmige Dichtungselement auf der dem Gehäuseinnenraum zugewandten Seite durch den Befestigungsanschlag und auf der dem Gehäuseinnenraum abgewandten Seite durch das hülsenförmige Befestigungselement eingeklemmt.

Erfindungsgemäß besteht die jeweilige Dichtungsanordnung ausschließlich aus dem jeweiligen hülsenförmigen Befestigungselement und dem jeweiligen ringförmigen Dichtungselement.

Dadurch wird der technische Vorteil erreicht, dass eine vorteilhafte Vereinfachung der jeweiligen Dichtungsanordnung dadurch erreicht wird, dass nur zwei Bauteile verwendet werden.

In einer vorteilhaften Ausführungsform weist die Fluidventilanordnung ein Fluidverteilungselement, insbesondere eine Fluidverteilungsplatte, mit zumindest zwei, insbesondere vier, Fluidkanälen auf, wobei das Ventilgehäuse an dem Fluidverteilungselement befestigt ist, und wobei jeweils eine Gehäuseöffnung des Ventilgehäuses mit jeweils einem Fluidkanal fluidtechnisch verbunden ist, insbesondere durch jeweils einen Gehäusestutzen der Fluidventilanordnung fluidtechnisch verbunden ist.

Dadurch wird der technische Vorteil erreicht, dass durch die Anordnung des Ventilgehäuses an dem Fluidverteilungselement eine wirksame Weiterverteilung des durch das Ventilgehäuse strömenden Fluids in die entsprechenden Fluidkanäle sichergestellt wird.

In einer vorteilhaften Ausführungsform ist der jeweilige Gehäusestutzen der Fluidventilanordnung mit dem Fluidverteilungselement durch eine formschlüssige und/oder kraftschlüssige Verbindung, insbesondere durch eine Rastverbindung oder Schraubverbindung, verbunden ist, oder ist der jeweilige Gehäusestutzen der Fluidventilanordnung mit dem Fluidverteilungselement durch eine stoffschlüssige Verbindung verbunden.

Dadurch wird der technische Vorteil erreicht, dass die formschlüssige oder kraftschlüssige Verbindung zwischen dem jeweilige Gehäusestutzen und dem Fluidverteilungselement vorteilhaft, z.B. bei einer Demontage, wieder gelöst werden kann, bzw. die stoffschlüssige Verbindung eine besonders stabile Verbindung bereitstellt.

In einer vorteilhaften Ausführungsform werden die zumindest zwei, insbesondere vier, Fluidkanäle jeweils durch ein Kanalgehäuse begrenzt, welches sich an einer Oberseite des Fluidverteilungselements erstreckt, wobei insbesondere an einer Oberseite des jeweiligen Fluidkanals jeweils eine Fluidkanalöffnung gebildet ist, welche mit jeweils einem Gehäusestutzen der Fluidventilanordnung fluidtechnisch verbunden ist.

Dadurch wird der technische Vorteil erreicht, dass eine besonders vorteilhafte fluidtechnische Anbindung zwischen dem jeweiligen Fluidkanal des Fluidverteilungselements und dem jeweiligen Gehäusestutzen der Fluidventilanordnung erreicht werden kann.

Ausführungsbeispiele der Erfindung sind in den Zeichnungen dargestellt und werden im Folgenden näher beschrieben.

Es zeigen:
- Fig. 1: eine perspektivische Ansicht einer Fluidventilanordnung gemäß einer Ausführungsform;
- Fig. 2: eine weitere perspektivische Ansicht der in Fig. 1 dargestellten Fluidventilanordnung;
- Fig. 3: eine perspektivische Ansicht einer Dichtungsanordnung der in Fig. 1 dargestellten Fluidventilanordnung;
- Fig. 4: eine weitere perspektivische Ansicht der in Fig. 3 dargestellten Dichtungsanordnung;
- Fig. 5: eine weitere perspektivische Ansicht der in Fig. 1 dargestellten Fluidventilanordnung;
- Fig. 6: eine perspektivische Ansicht einer Fluidventilanordnung gemäß einer weiteren Ausführungsform;
- Fig. 7: eine perspektivische Ansicht einer Fluidventilanordnung gemäß einer weiteren Ausführungsform;
- Fig. 8: eine perspektivische Ansicht einer Fluidventilanordnung gemäß einer weiteren Ausführungsform; und
- Fig. 9: eine perspektivische Ansicht einer Fluidventilanordnung gemäß einer weiteren Ausführungsform.

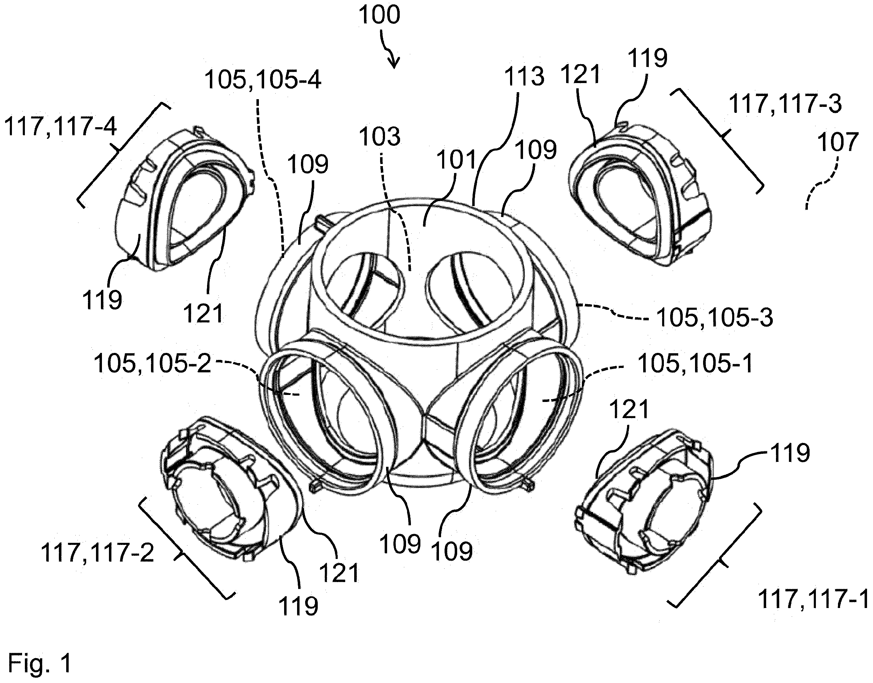

In der Fig. 1 ist die Fluidventilanordnung 100 in einer Explosionsdarstellung gezeigt.

Die Fluidventilanordnung 100 gemäß der vorliegenden Offenbarung dient zum Verbinden von Fluidleitungen in einer Vielzahl von fluidführenden Systemen eines Fahrzeuges. Die Fluidventilanordnung 100 kann zur fluidtechnischen Verbindung von Kraftstoff-, Kühlflüssigkeits-, Ladeluft-, Bremsflüssigkeits-, Wasser-, SCR-, und/oder Getriebeölleitungen in Fahrzeugen eingesetzt werden. Die Fluidventilanordnung 100 kann alternativ auch beispielsweise in Kühlmittel-führende Fluidleitungen, welche zur Kühlung von Batteriezellen in einem elektrisch angetriebenen Fahrzeug verwendet werden, eingesetzt werden.

In fluidführenden Systemen eines Fahrzeuges werden unterschiedliche Fluide, wie z.B. Gase oder Flüssigkeiten, teilweise unter hohem Druck und bei hohen Temperaturen geleitet. Aufgrund der beengten Bauraumsituation in einem Fahrzeug müssen verschiedene Leitungen der entsprechenden fluidführenden Systeme oftmals durch entsprechende Fluidventilanordnungen 100 miteinander verbunden werden, um eine wirksame Fluidleitung zu bewirken. Hierbei werden an die fluidtechnischen Schnittstellen zwischen entsprechenden fluidführenden Leitungen an entsprechend hohe Anforderungen in Bezug auf Stabilität und Fluiddichtigkeit der Fluidventilanordnungen 100 gestellt.

Zudem soll die Fluidventilanordnung 100 gemäß der vorliegenden Offenbarung aus einer Vielzahl von einfach zu fertigenden und einfach zusammenzufügenden, insbesondere modular aufgebauten, Bauelementen gefertigt werden, um eine Fluidventilanordnung 100 bereitzustellen, welche mit einem geringen Montageaufwand und damit kostengünstig zu montieren ist.

Die Fluidventilanordnung 100 umfasst ein Ventilgehäuse 101, welches einen Gehäuseinnenraum 103 begrenzt, wobei das Ventilgehäuse 101 zumindest zwei, insbesondere vier Gehäuseöffnungen 105, 105-1, 105-2, 105-3, 105-4 aufweist. Die Gehäuseöffnungen 105, 105-1, 105-2, 105-3, 105-4 verbinden jeweils den Gehäuseinnenraum 103 mit einem Außenraum 107 der Fluidventilanordnung 100 fluidtechnisch. Die jeweilige Gehäuseöffnung 105, 105-1, 105-2, 105-3, 105-4 wird jeweils durch einen Öffnungsrand 109 des Ventilgehäuses 101 begrenzt.

Die Fluidventilanordnung 100 umfasst ferner einen in Fig. 1 nicht dargestellten Ventilkolben 111, welcher drehbar in dem Gehäuseinnenraum 103 angeordnet und ausgebildet ist, in Abhängigkeit einer Kolbenstellung die zumindest zwei, insbesondere vier, Gehäuseöffnungen 105, 105-1, 105-2, 105-3, 105-4 zumindest teilweise fluidtechnisch zu sperren oder zumindest teilweise fluidtechnisch freizugeben.

Aus der Fig. 1 ist ersichtlich, dass die erste Gehäuseöffnung 105-1 und die vierte Gehäuseöffnung 105-4 gegenüberliegend an dem Ventilgehäuse 101 angeordnet sind, und dass die zweite Gehäuseöffnung 105-2 und die dritte Gehäuseöffnung 105-3 gegenüberliegend an dem Ventilgehäuse 101 angeordnet sind.

Der in Fig. 1 nicht dargestellte Ventilkolben 111 ist hierbei zwischen einer ersten und zweiten Kolbenstellung drehbar, und weist insbesondere einen geraden Fluidkanal auf, welche gegenüberliegende Gehäuseöffnungen 105-1 und 105-4 oder 105-2 und 105-3 miteinander fluidtechnisch verbindet.

Bei einem geraden Fluidkanal gibt der Ventilkolben 111, insbesondere ein Fluidkanal des Ventilkolbens 111, in einer ersten Kolbenstellung die zweite und dritte Gehäuseöffnung 105-2, 105-3 zumindest teilweise, insbesondere vollständig, fluidtechnisch frei, und der Ventilkolben 111 sperrt die erste und vierte Gehäuseöffnung 105-1, 105-4 zumindest teilweise, insbesondere vollständig, fluidtechnisch.

Bei einem geraden Fluidkanal gibt der Ventilkolben 111, insbesondere ein Fluidkanal des Ventilkolbens 111, in einer zweiten Kolbenstellung die erste und vierte Gehäuseöffnung 105-1, 105-4, zumindest teilweise, insbesondere vollständig, fluidtechnisch frei und der Ventilkolben 111 sperrt die zweite und dritte Gehäuseöffnung 105-2, 105-3 zumindest teilweise, insbesondere vollständig, fluidtechnisch.

Hierbei weist das Ventilgehäuse 101 in einer Oberseite eine Kolbenöffnung 113 auf, durch welche der in Fig. 1 nicht dargestellten Ventilkolben 111 in den Gehäuseinnenraum 103 des Ventilgehäuses 101 eingeführt werden kann. Die Kolbenöffnung 113 kann durch einen in Fig. 1 nicht dargestellten Gehäusedeckel 115 der Fluidventilanordnung 100 verschlossen werden.

Zur fluidtechnischen Abdichtung weist die Fluidventilanordnung 100 ferner zumindest zwei, insbesondere vier, Dichtungsanordnungen 117, 117-1, 117-2, 117-3, 117-4 auf, wobei jeweils eine der zumindest zwei, insbesondere vier, Dichtungsanordnungen 117, 117-1, 117-2, 117-3, 117-4 in jeweils einer der zumindest zwei, insbesondere vier, Gehäuseöffnungen 105, 105-1, 105-2, 105-3, 105-4 angeordnet ist.

Insbesondere ist eine erste Dichtungsanordnung 117-1 in der ersten Gehäuseöffnung 105-1 angeordnet. Insbesondere ist eine zweite Dichtungsanordnung 117-2 in der zweiten Gehäuseöffnung 105-2 angeordnet. Insbesondere ist eine dritte Dichtungsanordnung 117-3 in der dritten Gehäuseöffnung 105-3 angeordnet. Insbesondere ist eine vierte Dichtungsanordnung 117-4 in der vierten Gehäuseöffnung 105-4 angeordnet.

Die Dichtungsanordnungen 117 umfassen jeweils ein hülsenförmiges Befestigungselement 119 und ein ringförmiges Dichtungselement 121.

Das jeweilige hülsenförmige Befestigungselement 119 ist mit dem jeweiligen Öffnungsrand 109 des Ventilgehäuses 101 formschlüssig oder kraftschlüssig verbunden, insbesondere durch eine Rastverbindung.

Somit kann die formschlüssige oder kraftschlüssige Verbindung zwischen dem jeweiligen hülsenförmigen Befestigungselement 119 und dem jeweiligen Öffnungsrand 109 des Ventilgehäuses 101 bei einer Demontage der Fluidventilanordnung 100 insbesondere vorteilhaft gelöst werden, ohne hierbei das Ventilgehäuse 101 zu beschädigen.

Das jeweilige hülsenförmige Befestigungselement 119 ist ausgebildet, das jeweilige ringförmige Dichtungselement 121 gegen den in dem Gehäuseinnenraum 103 angeordneten und in Fig. 1 nicht dargestellten Ventilkolben 111 zu pressen, um eine fluidtechnische Abdichtung zwischen dem Ventilkolben 111 und dem jeweiligen Öffnungsrand 109 des Ventilgehäuses 101 zu bewirken.

Somit stellen die Dichtungsanordnungen 117 in Abhängigkeit von der Kolbenstellung des Ventilkolbens 111 eine fluidtechnische Abdichtung für die Gehäuseöffnungen 105 des Ventilgehäuses 101 sicher.

Die Fluidventilanordnung 100 weist ferner zumindest zwei, insbesondere vier, in Fig. 1 nicht dargestellte Gehäusestutzen 123 auf, wobei jeweils ein Gehäusestutzen 123 der zumindest zwei, insbesondere vier Gehäusestutzen 123 an jeweils einer der vier Gehäuseöffnungen 105 angeordnet ist. Die jeweiligen Gehäusestutzen 123 können entweder durch eine kraftschlüssige oder formschlüssige Verbindung mit dem jeweiligen Öffnungsrand 109 verbunden sein oder die jeweiligen Gehäusestutzen 123 können durch eine stoffschlüssige Verbindung mit dem jeweiligen Öffnungsrand 109 verbunden sein.

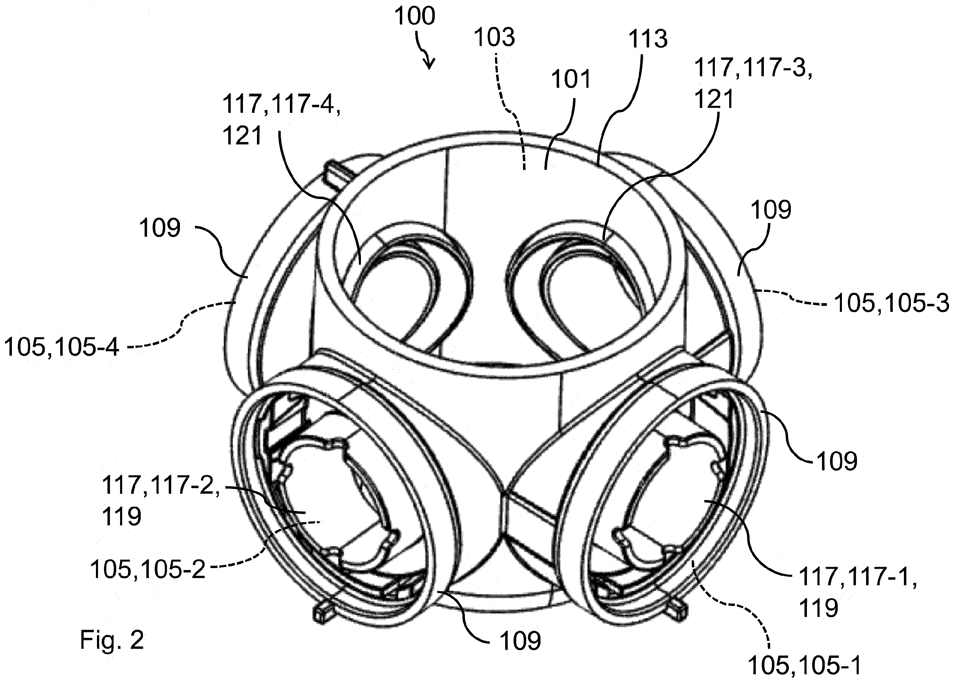

Fig. 2 zeigt eine weitere perspektivische Ansicht der in Fig. 1 dargestellten Fluidventilanordnung.

Die in der Fig. 2 dargestellte Fluidventilanordnung 100 entspricht der in Fig. 1 dargestellten Fluidventilanordnung 100 bis darauf, dass die jeweiligen Dichtungsanordnungen 117 in den jeweiligen Gehäuseöffnungen 105 angeordnet sind.

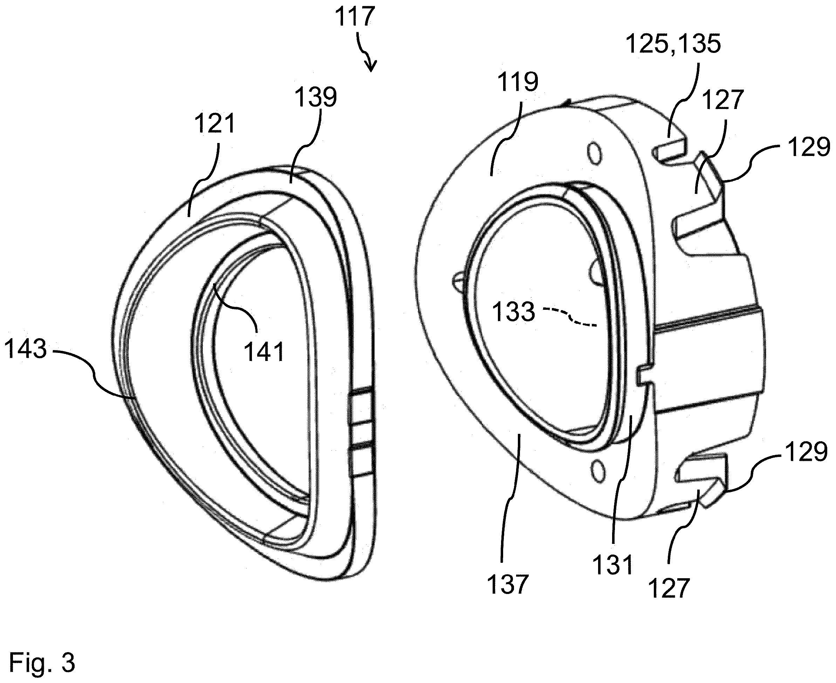

Fig. 3 zeigt eine perspektivische Ansicht einer Dichtungsanordnung der in Fig. 1 dargestellten Fluidventilanordnung.

In der Fig. 3 ist die Dichtungsanordnung 117 in einer Explosionsdarstellung gezeigt, in welcher das hülsenförmige Befestigungselement 119 von dem ringförmigen Dichtungselement 121 separat dargestellt ist.

Das jeweilige ringförmige Dichtungselement 121 ist an einer dem Gehäuseinnenraum 103 des Ventilgehäuses 101 zugewandten Seite des jeweiligen hülsenförmigen Befestigungselements 119 angeordnet.

Die bereits in Bezug auf die Fig. 1 beschriebene formschlüssige oder kraftschlüssige Verbindung zwischen dem hülsenförmigen Befestigungselement 119 mit dem jeweiligen Öffnungsrand 109 des Ventilgehäuses 101 umfasst insbesondere eine Rastverbindung.

Das hülsenförmige Befestigungselement 119 weist hierbei eine Hülsenaußenseite 125 aufweist, welche an einer der jeweiligen Gehäuseöffnung 105 zugewandten und in Fig. 3 nicht dargestellten Randinnenseite 147 des Öffnungsrands 109 anliegt, insbesondere formschlüssig oder kraftschlüssig anliegt.

Das hülsenförmige Befestigungselement 119, insbesondere die Hülsenaußenseite 125, weist hierbei zumindest zwei Rastarme 127, insbesondere drei Rastarme 127, auf, welche jeweils in eine in Fig. 3 nicht dargestellte Rastaufnahme des Öffnungsrands 109, insbesondere an einer Randinnenseite 147, eingreifen, um das hülsenförmige Befestigungselement 119 kraftschlüssig an dem Öffnungsrand 109 zu befestigen. In der Fig. 3 ist der dritte der drei Rastarme 127 nicht einsehbar.

Die Rastarme 127 sind federelastisch ausgebildet und weisen insbesondere an einem Ende einen Rastvorsprung 129 auf.

Somit kann durch die Rastarme 127 des hülsenförmigen Befestigungselements 119 eine wirksame Befestigung der Dichtungsanordnung 117 an dem Öffnungsrand 109 des Ventilgehäuses 101 sichergestellt werden, welche insbesondere durch ein Aufschwenken der Rastarme 127, z.B. bei einer Demontage, vorteilhaft gelöst werden kann.

Aus der Fig. 3 geht ferner hervor, dass das hülsenförmige Befestigungselement 119 einen inneren Hülsenabschnitt 131 aufweist, welcher einen Hülsendurchbruch 133 des hülsenförmigen Befestigungselements 119 zur Fluidleitung begrenzt, und einen äußeren Hülsenabschnitt 135 mit der Hülsenaußenseite 125 aufweist, welcher, bzw. welche mit dem Öffnungsrand 109 des Ventilgehäuses 101 formschlüssig oder kraftschlüssig verbunden ist.

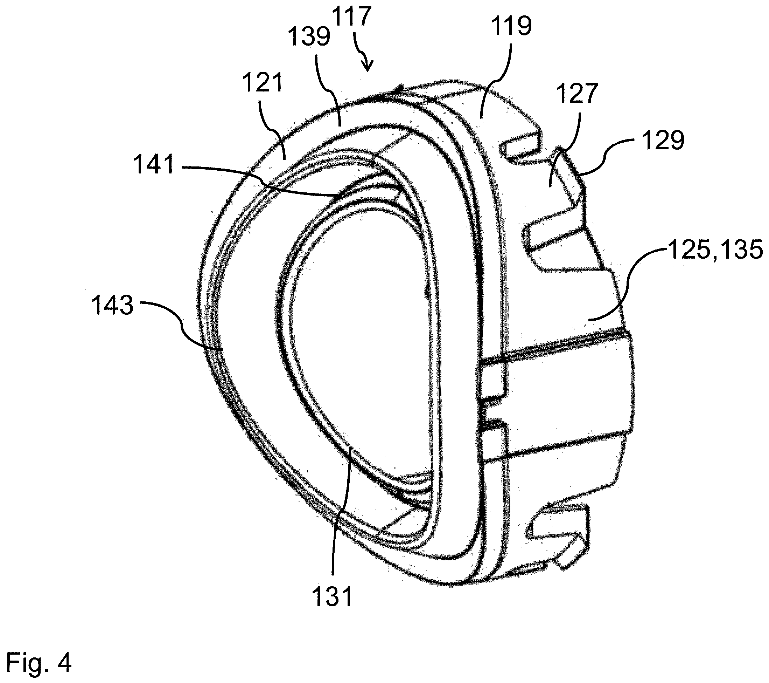

Aus der Fig. 3 geht ferner hervor, dass insbesondere zwischen dem inneren Hülsenabschnitt 131 und dem äußeren Hülsenabschnitt 135 ein dem Gehäuseinnenraum 103 des Ventilgehäuses 101 zugewandter Aufnahmebereich 137 angeordnet ist, in welchem das jeweilige ringförmige Dichtungselement 121 zumindest abschnittsweise aufgenommen ist. Für eine entsprechende Darstellung eines in dem Aufnahmebereich 137 zumindest abschnittsweise aufgenommenen ringförmigen Dichtungselements 121 wird auf die Fig. 4 verwiesen. Das ringförmige Dichtungselement 121 liegt hierbei insbesondere zumindest abschnittweise an dem inneren und äußeren Hülsenabschnitt 131, 135 des hülsenförmigen Befestigungselements 119 an.

Das ringförmige Dichtungselement 121 weist eine erste Dichtungslippe 139 auf, welche an dem hülsenförmigen Befestigungselement 119, insbesondere an dem äußeren Hülsenabschnitt 135, dichtend anliegt. Auch wenn dies aus der Fig. 3 nicht hervorgeht, liegt die erste Dichtungslippe 139 zumindest abschnittsweise an dem Öffnungsrand 109 des Ventilgehäuses 101 an.

Das ringförmige Dichtungselement 121 weist eine zweite Dichtungslippe 141 auf, welche an dem hülsenförmigen Befestigungselement 119, insbesondere an dem inneren Hülsenabschnitt 131 dichtend anliegt.

Das ringförmige Dichtungselement 121 weist eine dritte Dichtungslippe 143 auf, welche an dem in Fig. 3 nicht dargestellten Ventilkolben 111 der Fluidventilanordnung 100 dichtend anliegt. Insbesondere liegt die dritte Dichtungslippe 143 zumindest abschnittsweise auch an dem Öffnungsrand 109 des Ventilgehäuses 101 an.

Das ringförmige Dichtungselement 121 ist mit dem hülsenförmigen Befestigungselement 119 durch eine kraftschlüssige oder formschlüssige Verbindung verbunden, oder das ringförmige Dichtungselement 121 ist mit dem hülsenförmigen Befestigungselement 119 durch eine stoffschlüssige Verbindung verbunden.

Aus der Fig. 3 ist zu entnehmen, dass die Dichtungsanordnung 117 insbesondere ausschließlich aus dem ringförmige Dichtungselement 121 und dem hülsenförmigen Befestigungselement 119 besteht. Somit kann auf einen innenseitig an dem ringförmigen Dichtungselement 121 angeordneten Halter verzichtet werden, da das Befestigungselement 119 das ringförmige Dichtungselement 121 selbst gegen den Ventilkolben 111 presst und damit einen ausreichend Pressdruck für eine fluiddichte Verbindung bereitgestellt werden kann.

Fig. 4 zeigt eine weitere perspektivische Ansicht der in Fig. 3 dargestellten Dichtungsanordnung.

Die in der Fig. 4 dargestellte Dichtungsanordnung 117 entspricht der in Fig. 3 dargestellten Dichtungsanordnung 117 bis darauf, dass das ringförmige Dichtungselement 121 an dem hülsenförmigen Befestigungselement 119 angeordnet ist.

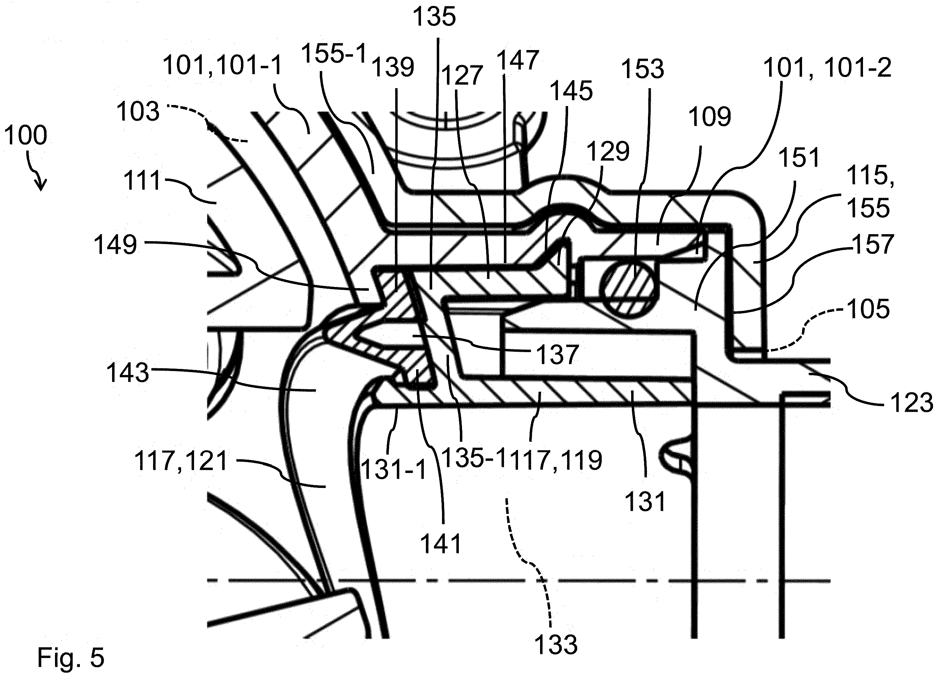

Fig. 5 zeigt eine weitere perspektivische Ansicht der in Fig. 1 dargestellten Fluidventilanordnung.

In der Fig. 5 ist eine Schnittdarstellung durch ein Ventilgehäuse 101 der Fluidventilanordnung 100, insbesondere durch eine Gehäuseöffnung 105 des Ventilgehäuses 101, dargestellt.

Die in Fig. 5 dargestellte Fluidventilanordnung 100 zeigt im Gegensatz zur Fig. 1 einen an dem Ventilgehäuse 101 befestigten Gehäusedeckel 115, sowie einen Gehäusestutzen 123, welche an der jeweiligen Gehäuseöffnung 105 angeordnet ist.

In dem durch das Ventilgehäuse 101 begrenzten Gehäuseinnenraum 103 ist ein drehbarer Ventilkolben 111 angeordnet, welcher in der in Fig. 1 dargestellten ersten Kolbenstellung die in Fig. 5 dargestellte Gehäuseöffnung 105 zumindest teilweise fluidtechnisch freigibt.

In der Fig. 5 ist ferner eine Dichtungsanordnung 117, umfassend ein hülsenförmiges Befestigungselement 119 und ein ringförmiges Dichtungselement 121, dargestellt, welche in der Gehäuseöffnung 105 angeordnet ist. Für eine Detailansicht der Dichtungsanordnung 117 wird auf die Figuren 3 und 4 verwiesen.

Das hülsenförmige Befestigungselement 119 weist einen Rastarm 127 mit einem Rastvorsprung 129 auf, welcher in eine Rastaufnahme 145 des die Gehäuseöffnung 105 begrenzenden Öffnungsrands 109 eingreift, um eine kraftschlüssige Befestigung des hülsenförmigen Befestigungselements 119 an dem Öffnungsrand 109 zu bewirken. Die Rastaufnahme 145 ist hierbei insbesondere an einer Randinnenseite 147 des Öffnungsrands 109 angeordnet. Der Rastarm 127 ist hierbei an einem äußeren Hülsenabschnitt 135 des hülsenförmigen Befestigungselements 119 angeordnet.

Das hülsenförmige Befestigungselement 119 weist ferner einen inneren Hülsenabschnitt 131 auf, welcher einen Hülsendurchbruch 133 des hülsenförmigen Befestigungselements 119 begrenzt. Zwischen dem inneren Hülsenabschnitt 131 und dem äußeren Hülsenabschnitt 135 ist ein Aufnahmebereich 137 des hülsenförmigen Befestigungselements 119 angeordnet, in welchem das ringförmige Dichtungselement 121 aufgenommen ist.

Der Aufnahmebereich 137 für das ringförmige Dichtungselement 121 ist hierbei insbesondere durch einen inneren Hülsenvorsprung 131-1, welcher dem Gehäuseinnenraum 103 des Ventilgehäuses 101 zugewandt ist, des inneren Hülsenabschnitts 131 begrenzt.

Der Aufnahmebereich 137 für das ringförmige Dichtungselement 121 ist hierbei insbesondere durch einen Anlegeabschnitt 135-1, welcher sich winklig von dem inneren Hülsenabschnitt 131 erstreckt, des äußeren Hülsenabschnitts 135 begrenzt.

Der Aufnahmebereich 137 für das ringförmige Dichtungselement 121 ist hierbei insbesondere durch einen Befestigungsanschlag 149 des jeweiligen Öffnungsrands 109 begrenzt.

Das ringförmige Dichtungselement 121 weist eine erste Dichtungslippe 139 auf, welche an dem hülsenförmigen Befestigungselement 119, insbesondere dem Anlegeabschnitt 135-1 des äußeren Hülsenabschnitts 135, und an dem Befestigungsanschlag 149 des jeweiligen Öffnungsrands 109 zumindest abschnittsweise dichtend anliegt.

Das ringförmige Dichtungselement 121 weist eine zweite Dichtungslippe 141 auf, welche an dem hülsenförmigen Befestigungselement 119, insbesondere an dem Anlegeabschnitt 135-1 des äußeren Hülsenabschnitts 135, und an dem inneren Hülsenvorsprung 131-1 des inneren Hülsenabschnitts 131 anliegt.

Das ringförmige Dichtungselement 121 weist eine dritte Dichtungslippe 143 auf, welche an dem Ventilkolben 111 der Fluidventilanordnung 100 dichtend anliegt.

Somit wird durch das ringförmige Dichtungselement 121 eine wirksame fluidtechnisch dichtende Verbindung zwischen Ventilkolben 111 und dem Öffnungsrand 109 des Ventilgehäuses 101 bewirkt.

Hierbei beaufschlagt das hülsenförmige Befestigungselement 119 das ringförmige Dichtungselement 121 mit einer Kraft, um das ringförmige Dichtungselement 121 gegen den Ventilkörper 111 und den Öffnungsrand 109 zu pressen.

In der Fig. 5 ist ferner ein Gehäusestutzen 123 der Fluidventilanordnung 100 dargestellt, welcher an der Gehäuseöffnung 105 angeordnet ist, wobei der Gehäusestutzen 123 im vorliegenden Fall lösbar, insbesondere durch eine kraftschlüssige Verbindung mit dem jeweiligen Öffnungsrand 109 verbunden ist.

Der Gehäusestutzen 123 weist einen Stutzeninnenabschnitt 151 auf, welcher in der Gehäuseöffnung 105 angeordnet ist, und an der Dichtungsanordnung 117, insbesondere an dem hülsenförmigen Befestigungselement 119, anliegt. Zwischen dem Stutzeninnenabschnitt 151 und dem Öffnungsrand 109 ist ein weiteres Dichtungselement 153, insbesondere ein Dichtungsring, angeordnet, welcher eine fluidtechnische Abdichtung zwischen dem Öffnungsrand 109 und dem Stutzeninnenabschnitt 151 sicherstellt.

In der Fig. 5 ist ferner ein Gehäusedeckel 115 der Fluidventilanordnung 100 dargestellt, welche einen Deckelabschnitt 155 aufweist, welcher an dem Gehäusestutzen 123 anliegt, insbesondere an einer Stutzenaußenseite 157 des Stutzeninnenabschnitts 151 anliegt. Der Gehäusedeckel 115 ist insbesondere lösbar, insbesondere kraftschlüssig oder formschlüssig, oder nicht lösbar, insbesondere stoffschlüssig, an dem Ventilgehäuse 101 befestigt.

Insbesondere weist der Gehäusedeckel 115 einen Deckeloberbereich 115-1 auf, welcher an einer in Fig. 5 lediglich schematisch dargestellten Oberseite 101-1 des Ventilgehäuses 101 anliegt, wobei sich insbesondere zumindest zwei, insbesondere vier, Deckelabschnitte 155, 155-1, 155-2, 155-3, 155-4 von dem Deckeloberbereich 115-1 aus erstrecken. Jeweils einer der zumindest zwei, insbesondere vier, Deckelabschnitte 155 liegt insbesondere jeweils an einer in Fig. 5 nur schematisch dargestellten Lateralseite 101-2 von zumindest zwei, insbesondere vier Lateralseiten 101-2 des Ventilgehäuses 101 an.

Wie aus der Fig. 5 nicht hervorgeht, sind insbesondere jeweils zwei der zumindest zwei, insbesondere vier Gehäuseöffnungen 105 auf jeweils gegenüberliegenden Lateralseiten 101-2 des Ventilgehäuses 101 angeordnet und sind insbesondere jeweils zwei der zumindest zwei, insbesondere vier, Deckelabschnitte 155 an den jeweils gegenüberliegenden Lateralseiten 101-2 des Ventilgehäuses 101 angeordnet.

Wie aus der Fig. 5 ersichtlich ist, beaufschlagt der Deckelabschnitt 155 des Gehäusedeckels 115 den Gehäusestutzen 123, insbesondere die Stutzenaußenseite 157 des Stutzeninnenabschnitts 151 des Gehäusestutzens 123, mit einer Kraft, so dass der Gehäusestutzen 123 gegen die an dem Gehäusestutzen 123 anliegende Dichtungsanordnung 117 presst, welche somit wiederum gegen den Ventilkolben 111 und das Ventilgehäuse 101 gepresst wird, um eine wirksame fluidtechnische Abdichtung zu bewirken.

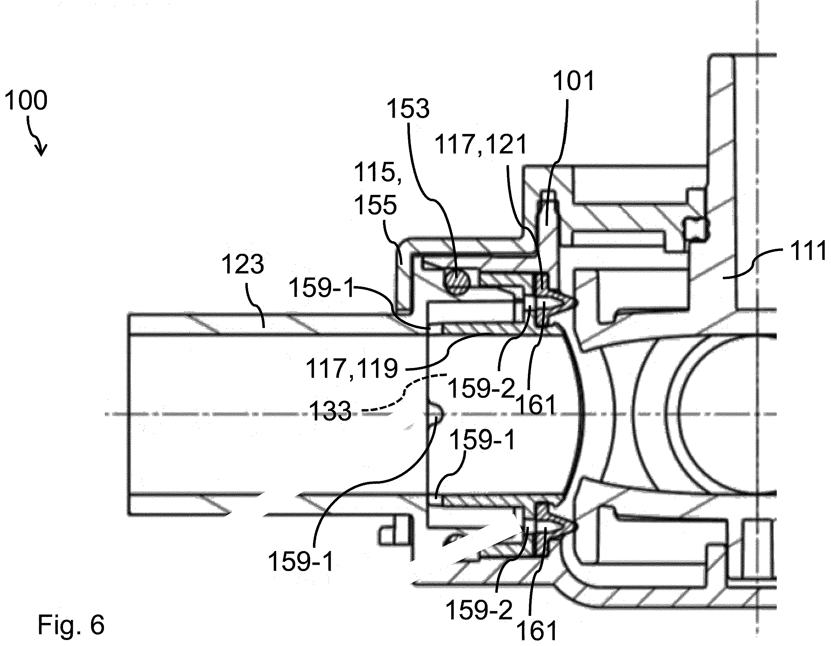

Fig. 6 zeigt eine perspektivische Ansicht einer Fluidventilanordnung gemäß einer weiteren Ausführungsform.

Ebenso wie in Fig. 5 ist auch in der Fig. 6 der weiteren Ausführungsform eine Schnittdarstellung durch ein Ventilgehäuse 101 der Fluidventilanordnung 100, insbesondere durch eine Gehäuseöffnung 105 des Ventilgehäuses 101, dargestellt.

Ebenso wie in Fig. 5 weist auch die weitere Ausführungsform gemäß der Fig. 6 ein Ventilgehäuse 101 mit einem darin angeordneten Ventilkolben 111 auf, welcher in der in Fig. 6 dargestellten ersten Kolbenstellung eine Gehäuseöffnung 105 des Ventilgehäuses 101 zumindest teilweise fluidtechnisch freigibt. In der Gehäuseöffnung 105 ist eine Dichtungsanordnung 117, umfassend ein ringförmiges Dichtungselement 121 und ein hülsenförmiges Befestigungselement 119, sowie analog zur Fig. 5 ein Gehäusestutzen 123 angeordnet.

Als Unterschied zur Ausführungsform gemäß der Fig. 5 weist die Ausführungsform gemäß der Fig. 6 eine Mehrzahl von, insbesondere drei Durchflutungsöffnungen 159-1 auf, welche in dem hülsenförmigen Befestigungselement 119, insbesondere in dem inneren Hülsenabschnitt 131 gebildet sind, und eine Mehrzahl von zweiten Durchflutungsöffnung 159-2 auf, welche in dem hülsenförmigen Befestigungselement 119, insbesondere in dem äußeren Hülsenabschnitt 135 angeordnet sind. Die ersten und zweiten Durchflutungsöffnungen 159-1, 159-2 verbinden den Hülsendurchbruch 133 mit einem durch das ringförmige Dichtungselement 121 einseitig abgetrennten Dichtungsraum 161 fluidtechnisch.

Dadurch kann während der Leitung von Fluid durch den Hülsendurchbruch 133 und den Gehäusestutzen 123, das entsprechende Fluid durch die Durchflutungsöffnungen 159-1, 159-2 in den Dichtungsraum 161 einströmen und beaufschlagt das ringförmige Dichtungselement 121 mit einer Kraft, um somit die Dichtungswirkung zwischen dem ringförmigen Dichtungselement 121 und dem Ventilkolben 111 zu verbessern.

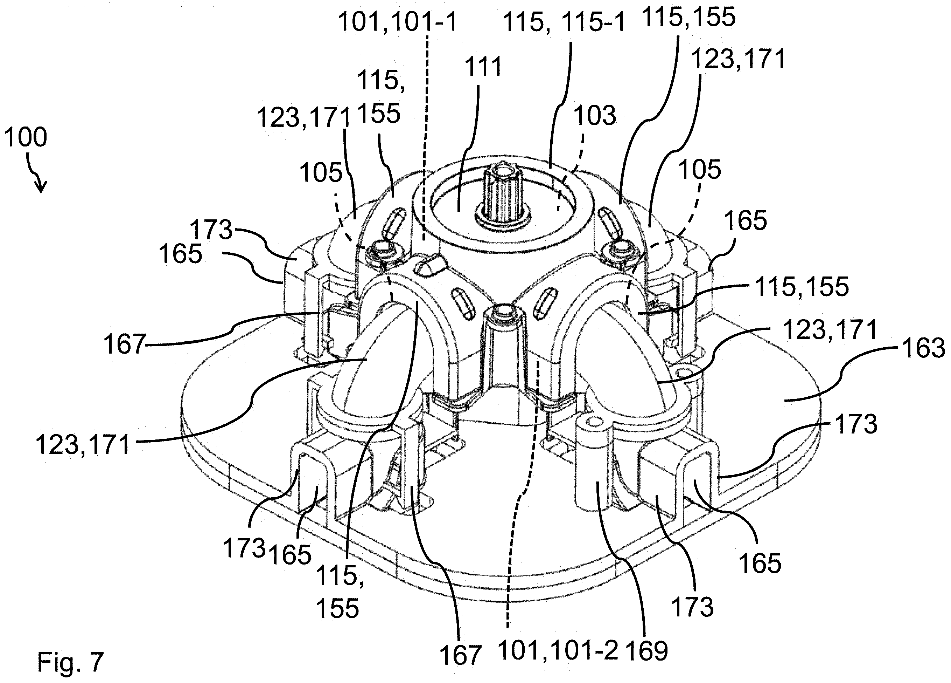

Fig. 7 zeigt eine perspektivische Ansicht einer Fluidventilanordnung gemäß einer weiteren Ausführungsform.

Die in Fig. 7 gezeigte Fluidventilanordnung 100 gemäß der weiteren Ausführungsform zeigt ein Ventilgehäuse 101 gemäß der in Fig. 1 dargestellten Fluidventilanordnung 100, welches einen Gehäuseinnenraum 103 begrenzt, in welchem ein drehbarer Ventilkolben 111 aufgenommen ist. Entsprechende in den jeweiligen Gehäuseöffnungen 105 angeordnete Dichtungsanordnungen 117 sind in der in Fig. 1 gezeigten Darstellung nicht einsehbar.

Entsprechende an den jeweiligen Gehäuseöffnungen 105 angeordnete Gehäusestutzen 123 werden durch Deckelabschnitte 155 eines Gehäusedeckels 115 festgelegt, wie in den vorangegangen Ausführungen bereits beschrieben wurde.

Die in der Fig. 7 dargestellte Fluidventilanordnung 100 gemäß der weiteren Ausführungsform weist ferner ein Fluidverteilungselement 163, insbesondere eine Fluidverteilungsplatte, mit zumindest zwei, insbesondere vier, Fluidkanälen 165 auf.

Das Ventilgehäuse 101 ist an dem Fluidverteilungselement 163 befestigt, wobei jeweils eine Gehäuseöffnung 105 des Ventilgehäuses 101 mit jeweils einem Fluidkanal 165 fluidtechnisch verbunden ist, insbesondere durch jeweils einen Gehäusestutzen 123, insbesondere durch einen Stutzenaußenabschnitt 171 des Gehäusestutzens 123, fluidtechnisch verbunden ist.

Der jeweilige Gehäusestutzen 123 der Fluidventilanordnung 100 ist mit dem Fluidverteilungselement 163 lösbar, insbesondere durch eine formschlüssige oder kraftschlüssige Verbindung, insbesondere durch eine Rastverbindung, verbunden. Entsprechende an den Gehäusestutzen 123 angeordnete Stutzenrastelemente 167 und Stutzenschraubelemente 169 sind in der Fig. 7 dargestellt. Alternativ ist auch eine nicht lösbare, insbesondere eine stoffschlüssige Verbindung, des jeweiligen Gehäusestutzens 123 mit dem Fluidverteilungselement 163 möglich.

Aus der Fig. 7 ist ersichtlich, dass sich die Fluidkanäle 165 jeweils durch ein Kanalgehäuse 173 begrenzt sind, welches sich an einer Oberseite des Fluidverteilungselements 163 erstreckt. An einer Oberseite des jeweiligen Fluidkanals 165 ist jeweils eine in der Fig. 7 nicht dargestellte Fluidkanalöffnung gebildet, welche mit dem Gehäusestutzen 123 der Fluidventilanordnung 100 fluidtechnisch verbunden ist.

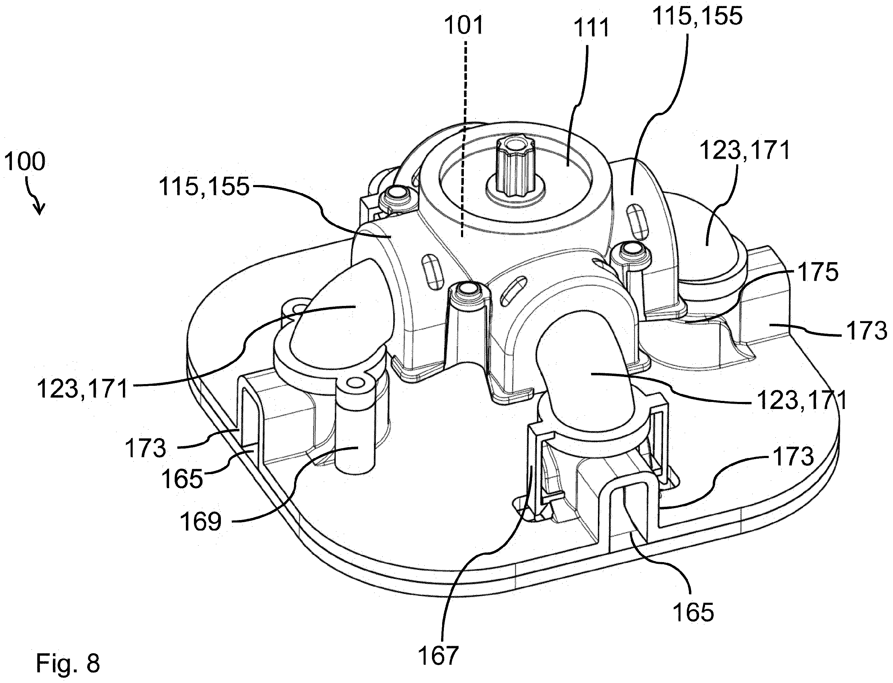

Fig. 8 zeigt eine perspektivische Ansicht einer Fluidventilanordnung gemäß einer weiteren Ausführungsform.

Die in Fig. 8 dargestellte Ausführungsform der Fluidventilanordnung 100 entspricht der in Fig. 7 dargestellten Ausführungsform der Fluidventilanordnung 100, bis darauf, dass die Ausführungsform gemäß der Fig. 8 neben dem Stutzenrastelement 167 und dem Stutzenschraubelement 169 auch noch ein Stoffschlusselement 175 aufweist, welches eine stoffschlüssige Verbindung, insbesondere eine Verschweißung, des jeweiligen Gehäusestutzens 123 mit dem Fluidverteilungselement 163 ermöglicht.

Das Stutzenrastelement 167, Stutzenschraubelement 169, und/oder das Stoffschlusselement 175 können beliebig kombiniert werden, um beliebige Gehäusestutzen 123 mit dem Fluidverteilungselement 163 zu verbinden.

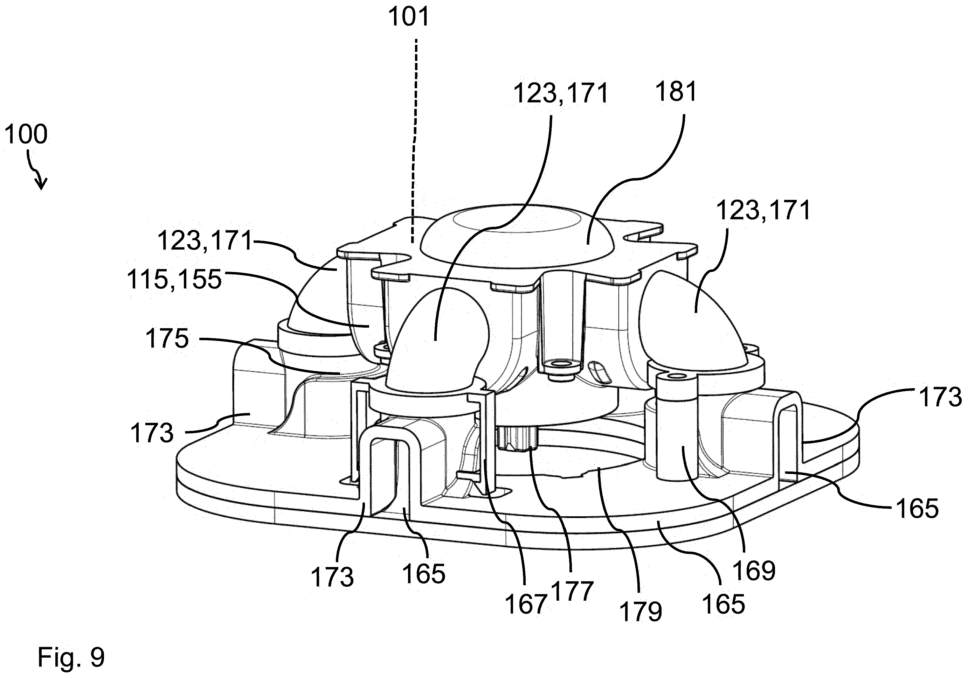

Fig. 9 zeigt eine perspektivische Ansicht einer Fluidventilanordnung gemäß einer weiteren Ausführungsform.

Die in Fig. 9 dargestellte Ausführungsform der Fluidventilanordnung 100 entspricht der in Fig. 8 dargestellten Ausführungsform der Fluidventilanordnung 100, bis darauf, dass in der Ausführungsform gemäß der Fig. 9 der Ventilkolben 111 um 180° gedreht angeordnet ist, so dass der Antriebsschaft 177 des Ventilkolbens 111 nicht an der Oberseite des Ventilgehäuses 101, sondern an der Unterseite des Ventilgehäuses 101 angeordnet ist. Somit ist der Antriebsschaft 177 an einer dem Fluidverteilungselement 165 zugewandten Seite des Ventilgehäuses 101 angeordnet.

Hierbei ist der Antriebsschaft 177 des Ventilkolbens 111 durch einen Kolbenantrieb, insbesondere Elektromotor, drehbar. Insbesondere erstreckt sich der in Fig. 9 dargestellte Antriebsschaft 177 durch eine in Fig. 9 nicht dargestellte Bodenöffnung des Ventilgehäuses 101.

Um eine wirksame Anbindung des in Fig. 9 nicht dargestellten Kolbenantriebs, insbesondere Elektromotor, an den Antriebsschaft 177 des Ventilkolbens 111 sicherzustellen, weist das Fluidverteilungselement 165 eine Antriebsöffnung 179 auf, in welcher der Kolbenantrieb zumindest abschnittsweise aufgenommen werden und mit dem Antriebsschaft 177 verbunden werden kann. Somit ist der Kolbenantrieb insbesondere zumindest abschnittweise an einer dem Ventilgehäuse 100 abgewandten Seite des Fluidverteilungselements 165 angeordnet.

Um die in dem Deckeloberbereich 115-1 des Gehäusedeckels 115 vorhandene Öffnung, welche im Gegensatz zu der Ausführungsform gemäß der Fig. 8 nicht mehr durch den Antriebsschaft 177 durchsetzt wird, wirksam zu verschließen, weist die in Fig. 8 dargestellte Fluidventilanordnung 100 eine obere Abschlussplatte 181 auf, welche an dem Deckeloberbereich 115-1 des Gehäusedeckels 115 angeordnet ist, und mit dem Gehäusedeckel 115 und/oder den Gehäusestutzen 123 verschweißt ist.

Durch die in Fig. 9 dargestellte Ausführungsform kann die Bauteilhöhe der Fluidventilanordnung 100 vorteilhaft reduziert werden, um den Einbau der Fluidventilanordnung 100 in Umgebungen sicherzustellen, in denen nur ein begrenzter Bauraum zur Verfügung steht.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fluidventilanordnung
- 101: Ventilgehäuse
- 101-1: Oberseite des Ventilgehäuses
- 101-2: Lateralseite des Ventilgehäuses
- 103: Gehäuseinnenraum
- 105: Gehäuseöffnung
- 105-1: Erste Gehäuseöffnung
- 105-2: Zweite Gehäuseöffnung
- 105-3: Dritte Gehäuseöffnung
- 105-4: Vierte Gehäuseöffnung
- 107: Außenraum der Fluidventilanordnung
- 109: Öffnungsrand
- 111: Ventilkolben
- 113: Kolbenöffnung
- 115: Gehäusedeckel
- 115-1: Deckeloberbereich des Gehäusedeckels
- 117: Dichtungsanordnung
- 117-1: Erste Dichtungsanordnung
- 117-2: Zweite Dichtungsanordnung
- 117-3: Dritte Dichtungsanordnung
- 117-4: Vierte Dichtungsanordnung
- 119: Hülsenförmiges Befestigungselement
- 121: Ringförmiges Dichtungselement
- 123: Gehäusestutzen
- 123-1: Erster Gehäusestutzen
- 123-2: Zweiter Gehäusestutzen
- 123-3: Dritter Gehäusestutzen
- 123-4: Vierter Gehäusestutzen
- 125: Hülsenaußenseite
- 127: Rastarm
- 129: Rastvorsprung
- 131: Innerer Hülsenabschnitt
- 131-1: Innerer Hülsenvorsprung
- 133: Hülsendurchbruch
- 135: Äußerer Hülsenabschnitt
- 135-1: Anlegeabschnitt des äußeren Hülsenabschnitts
- 137: Aufnahmebereich
- 139: Erste Dichtungslippe
- 141: Zweite Dichtungslippe
- 143: Dritte Dichtungslippe
- 145: Rastaufnahme des Öffnungsrands
- 147: Randinnenseite des Öffnungsrands
- 149: Befestigungsanschlag
- 151: Stutzeninnenabschnitt
- 153: Weiteres Dichtungselement
- 155: Deckelabschnitt
- 155-1: Erster Deckelabschnitt
- 155-2: Zweiter Deckelabschnitt
- 155-3: Dritter Deckelabschnitt
- 155-4: Vierter Deckelabschnitt
- 157: Stutzenaußenseite des Stutzeninnenabschnitts
- 159-1: Erste Durchflutungsöffnung
- 159-2: Zweite Durchflutungsöffnung
- 161: Dichtungsraum
- 163: Fluidverteilungselement
- 165: Fluidkanal
- 167: Stutzenrastelement
- 169: Stutzenschraubelement
- 171: Stutzenaußenabschnitt
- 173: Kanalgehäuse
- 175: Stoffschlusselement
- 177: Antriebsschaft
- 179: Antriebsöffnung
- 181: Obere Abschlussplatte

## Patentansprüche

1. Fluidventilanordnung (100), umfassend:
ein Ventilgehäuse (101), welches einen Gehäuseinnenraum (103) begrenzt, wobei das Ventilgehäuse (101) zumindest zwei Gehäuseöffnungen (105, 105-1, 105-2, 105-3, 105-4) aufweist, welche jeweils den Gehäuseinnenraum (103) mit einem Außenraum (107) der Fluidventilanordnung (100) fluidtechnisch verbinden, wobei die jeweilige Gehäuseöffnung (105, 105-1, 105-2, 105-3, 105-4) jeweils durch einen Öffnungsrand (109) des Ventilgehäuses (101) begrenzt wird,
einen Ventilkolben (111), welcher drehbar in dem Gehäuseinnenraum (103) angeordnet und ausgebildet ist, die zumindest zwei Gehäuseöffnungen (105, 105-1, 105-2, 105-3, 105-4) in Abhängigkeit einer Kolbenstellung des Ventilkolbens (111) zumindest teilweise fluidtechnisch zu sperren oder zumindest teilweise fluidtechnisch freizugeben, und
zumindest zwei Dichtungsanordnungen (117, 117-1, 117-2, 117-3, 117-4), wobei jeweils eine der zumindest zwei Dichtungsanordnungen (117, 117-1, 117-2, 117-3, 117-4) in jeweils einer der zumindest zwei Gehäuseöffnungen (105, 105-1, 105-2, 105-3, 105-4) angeordnet ist,
wobei die Dichtungsanordnungen (117, 117-1, 117-2, 117-3, 117-4) jeweils ein hülsenförmiges Befestigungselement (119) und ein ringförmiges Dichtungselement (121) aufweisen,
wobei das jeweilige hülsenförmige Befestigungselement (119) mit dem jeweiligen Öffnungsrand (109) des Ventilgehäuses (101) formschlüssig oder kraftschlüssig verbunden ist,
wobei das jeweilige hülsenförmige Befestigungselement (119) ausgebildet ist, das jeweilige ringförmige Dichtungselement (121) mit einer Kraft zu beaufschlagen, um das jeweilige ringförmige Dichtungselement (121) an den jeweiligen Öffnungsrand (109) des Ventilgehäuses (101) und an den Ventilkolben (111) zu pressen und eine fluidtechnische Abdichtung zwischen dem Ventilkolben (111) und dem jeweiligen Öffnungsrand (109) zu bewirken,
wobei das jeweilige hülsenförmige Befestigungselement (119) einen inneren Hülsenabschnitt (131), welcher einen Hülsendurchbruch (133) des jeweiligen hülsenförmigen Befestigungselements (119) begrenzt, und einen äußeren Hülsenabschnitt (135), welcher mit dem jeweiligen Öffnungsrand (109) des Ventilgehäuses (101) formschlüssig oder kraftschlüssig verbunden ist, aufweist, und wobei zwischen dem inneren Hülsenabschnitt (131) und dem äußeren Hülsenabschnitt (135) ein dem Gehäuseinnenraum (103) des Ventilgehäuses (101) zugewandter Aufnahmebereich (137) angeordnet ist, in welchem das jeweilige ringförmige Dichtungselement (121) zumindest abschnittsweise aufgenommen ist, **dadurch gekennzeichnet, dass** die jeweilige Dichtungsanordnung (117, 117-1, 117-2, 117-3, 117-4) ausschließlich aus dem jeweiligen hülsenförmigen Befestigungselement (119) und dem jeweiligen ringförmigen Dichtungselement (121) besteht, wobei die jeweilige Dichtungsanordnung (117, 117-1, 117-2, 117-3, 117-4) ausschließlich aus zwei Bauteilen besteht.

2. Fluidventilanordnung (100) nach Anspruch 1, wobei das Ventilgehäuse (101) vier Gehäuseöffnungen (105, 105-1, 105-2, 105-3, 105-4) aufweist, wobei der Ventilkolben (111) ausgebildet ist in einer ersten Kolbenstellung eine erste Untergruppe von jeweils zwei Gehäuseöffnung (105, 105-1, 105-2, 105-3, 105-4) der vier Gehäuseöffnungen (105, 105-1, 105-2, 105-3, 105-4) zumindest teilweise fluidtechnisch zu sperren und eine zweite Untergruppe von jeweils zwei Gehäuseöffnungen (105, 105-1, 105-2, 105-3, 105-4) der vier Gehäuseöffnungen (105, 105-1, 105-2, 105-3, 105-4) zumindest teilweise fluidtechnisch freizugeben, und wobei der Ventilkolben (111) ausgebildet ist in einer zweiten Kolbenstellung die zweite Untergruppe von jeweils zwei Gehäuseöffnungen (105, 105-1, 105-2, 105-3, 105-4) der vier Gehäuseöffnungen (105, 105-1, 105-2, 105-3, 105-4) zumindest teilweise fluidtechnisch zu sperren und die erste Untergruppe von jeweils zwei Gehäuseöffnungen (105, 105-1, 105-2, 105-3, 105-4) der vier Gehäuseöffnungen (105, 105-1, 105-2, 105-3, 105-4) zumindest teilweise fluidtechnisch freizugeben, wobei die Fluidventilanordnung (100) vier Dichtungsanordnungen (117, 117-1, 117-2, 117-3, 117-4) aufweist, welche jeweils in einer der vier Gehäuseöffnungen (105, 105-1, 105-2, 105-3, 105-4) angeordnet sind.

3. Fluidventilanordnung (100) nach Anspruch 1 oder 2, wobei die Fluidventilanordnung (100) zumindest zwei, insbesondere vier, Gehäusestutzen (123, 123-1, 123-2, 123-3, 123-4) aufweist, wobei jeweils einer der zumindest zwei, insbesondere vier, Gehäusestutzen (123, 123-1, 123-2, 123-3, 123-4) an jeweils einer der zumindest zwei, insbesondere vier, Gehäuseöffnungen (105, 105-1, 105-2, 105-3, 105-4) angeordnet ist, wobei die jeweiligen Gehäusestutzen (123, 123-1, 123-2, 123-3, 123-4) lösbar, insbesondere durch eine kraftschlüssige oder formschlüssige Verbindung, mit dem jeweiligen Öffnungsrand (109) verbunden sind oder wobei die jeweiligen Gehäusestutzen (123, 123-1, 123-2, 123-3, 123-4) nicht lösbar, insbesondere durch eine stoffschlüssige Verbindung, mit dem jeweiligen Öffnungsrand (109) verbunden sind.

4. Fluidventilanordnung (100) nach einem der vorangehenden Ansprüche, wobei die formschlüssige oder kraftschlüssige Verbindung zwischen dem jeweiligen hülsenförmigen Befestigungselement (119) der jeweiligen Dichtungsanordnung (117, 117-1, 117-2, 117-3, 117-4) mit dem jeweiligen Öffnungsrand (109) des Ventilgehäuses (101) eine Rastverbindung umfasst.

5. Fluidventilanordnung (100) nach einem der vorangehenden Ansprüche, wobei das jeweilige hülsenförmige Befestigungselement (119) eine Hülsenaußenseite (125) aufweist, welche an einer der jeweiligen Gehäuseöffnung (105, 105-1, 105-2, 105-3, 105-4) zugewandten Randinnenseite (147) des jeweiligen Öffnungsrands (109) anliegt, insbesondere formschlüssig oder kraftschlüssig anliegt.

6. Fluidventilanordnung (100) nach einem der vorangehenden Ansprüche, wobei das jeweilige hülsenförmige Befestigungselement (119), insbesondere die Hülsenaußenseite (125), zumindest zwei Rastarme (127), insbesondere drei Rastarme (127), aufweist, welche jeweils in eine Rastaufnahme (145) des jeweiligen Öffnungsrands (109), insbesondere eine Randinnenseite (147), eingreifen, um das jeweilige hülsenförmige Befestigungselement (119) kraftschlüssig an dem jeweiligen Öffnungsrand (109) zu befestigen, oder
wobei der jeweiligen Öffnungsrand (109), insbesondere eine Randinnenseite (147), zumindest zwei Rastarme (127), insbesondere drei Rastarme (127), aufweist, welche jeweils in eine Rastaufnahme (145) des jeweiligen hülsenförmigen Befestigungselements (119) eingreifen, um das jeweilige hülsenförmige Befestigungselement (119) kraftschlüssig an dem jeweiligen Öffnungsrand (109) zu befestigen.

7. Fluidventilanordnung (100) nach einem der vorangehenden Ansprüche, wobei das jeweilige ringförmige Dichtungselement (121) eine erste Dichtungslippe (139) aufweist, welche an dem jeweiligen hülsenförmigen Befestigungselement (119), insbesondere dem äußeren Hülsenabschnitt (135), und an dem jeweiligen Öffnungsrand (109), insbesondere Befestigungsanschlag (149), dichtend anliegt, und/oder wobei das jeweilige ringförmige Dichtungselement (121) eine zweite Dichtungslippe (141) aufweist, welche an dem jeweiligen hülsenförmigen Befestigungselement (119), insbesondere dem inneren Hülsenabschnitt (131) und dem äußeren Hülsenabschnitt (135) dichtend anliegt, und/oder wobei das jeweilige ringförmige Dichtungselement (121) eine dritte Dichtungslippe (143) aufweist, welche an dem Ventilkolben (111) dichtend anliegt.

8. Fluidventilanordnung (100) nach einem der vorangehenden Ansprüche, wobei in dem jeweiligen hülsenförmigen Befestigungselement (119), insbesondere in dem inneren Hülsenabschnitt (131) zumindest eine erste Durchflutungsöffnung (159-1) gebildet ist, und wobei in dem jeweiligen hülsenförmigen Befestigungselement (119), insbesondere in dem äußeren Hülsenabschnitt (135) zumindest eine zweite Durchflutungsöffnung (159-2) gebildet ist, wobei die erste und zweite Durchflutungsöffnung (159-1, 159-2) einen Hülsendurchbruch des hülsenförmigen Befestigungselements (119) mit einem durch das jeweilige ringförmige Dichtungselement (121) einseitig abgetrennten Dichtungsraum (161) fluidtechnisch verbinden, um den einseitig abgetrennten Dichtungsraum (161) mit Fluid zu beschicken und eine Anpresskraft auf das jeweilige ringförmige Dichtungselement (121) zu bewirken.

9. Fluidventilanordnung (100) nach einem der vorangehenden Ansprüche, wobei das jeweilige ringförmige Dichtungselement (121) mit dem jeweiligen hülsenförmigen Befestigungselement (119) durch eine kraftschlüssige und/oder formschlüssige Verbindung verbunden ist, oder wobei das jeweilige ringförmige Dichtungselement (121) mit dem jeweiligen hülsenförmigen Befestigungselement (119) durch eine stoffschlüssige Verbindung verbunden ist.

10. Fluidventilanordnung (100) nach einem der vorangehenden Ansprüche, wobei der jeweilige Öffnungsrand (109) zumindest einen Befestigungsanschlag (149) aufweist, an welchem das jeweilige ringförmige Dichtungselement (121), insbesondere die erste Dichtungslippe (139) anliegt, um eine fluidtechnisch dichtende Verbindung zwischen dem jeweiligen ringförmigen Dichtungselement (121) und dem jeweiligen Öffnungsrand (109) des Ventilgehäuses (101) zu bewirken.

11. Fluidventilanordnung (100) nach einem der vorangehenden Ansprüche, wobei die Fluidventilanordnung (100) ein Fluidverteilungselement (163), insbesondere eine Fluidverteilungsplatte, mit zumindest zwei, insbesondere vier, Fluidkanälen aufweist, wobei das Ventilgehäuse (101) an dem Fluidverteilungselement (163) befestigt ist, und wobei jeweils eine Gehäuseöffnung (105, 105-1, 105-2, 105-3, 105-4) des Ventilgehäuses (101) mit jeweils einem Fluidkanal (165) fluidtechnisch verbunden ist, insbesondere durch jeweils einen Gehäusestutzen (123, 123-1, 123-2, 123-3, 123-4) der Fluidventilanordnung (100) fluidtechnisch verbunden ist.

12. Fluidventilanordnung (100) nach Anspruch 11, wobei der jeweilige Gehäusestutzen (123, 123-1, 123-2, 123-3, 123-4) der Fluidventilanordnung (100) mit dem Fluidverteilungselement (163) lösbar, insbesondere durch eine formschlüssige oder kraftschlüssige Verbindung, insbesondere durch eine Rastverbindung oder Schraubverbindung, verbunden ist, oder wobei der jeweilige Gehäusestutzen (123, 123-1, 123-2, 123-3, 123-4) der Fluidventilanordnung (100) mit dem Fluidverteilungselement (163) nicht lösbar, insbesondere durch eine stoffschlüssige Verbindung, verbunden ist.

13. Fluidventilanordnung (100) nach Anspruch 11 oder 12, wobei die zumindest zwei, insbesondere vier, Fluidkanäle (165) jeweils durch ein Kanalgehäuse (173) begrenzt werden, welches sich an einer Oberseite des Fluidverteilungselements (163) erstreckt, wobei insbesondere an einer Oberseite des jeweiligen Fluidkanals (165) jeweils eine Fluidkanalöffnung gebildet ist, welche mit jeweils einem Gehäusestutzen (123, 123-1, 123-2, 123-3, 123-4) der Fluidventilanordnung (100) fluidtechnisch verbunden ist.

## Claims

1. Fluid valve assembly (100) comprising:
a valve housing (101), which delimits a housing interior (103), wherein the valve housing (101) comprises at least two housing openings (105, 105-1, 105-2, 105-3, 105-4), which each fluidically connect the housing interior (103) to an exterior (107) of the fluid valve assembly (100), wherein the respective housing opening (105, 105-1, 105-2, 105-3, 105-4) is each delimited by an opening edge (109) of the valve housing (101),
a valve piston (111), which is rotatably arranged in the housing interior (103) and is adapted to at least partially fluidically block or at least partially fluidically release the at least two housing openings (105, 105-1, 105-2, 105-3, 105-4) depending on a piston position of the valve piston (111), and
at least two sealing arrangements (117, 117-1, 117-2, 117-3, 117-4), wherein a respective one of the at least two sealing arrangements (117, 117-1, 117-2, 117-3, 117-4) is arranged in a respective one of the at least two housing openings (105, 105-1, 105-2, 105-3, 105-4),
wherein the sealing arrangements (117, 117-1, 117-2, 117-3, 117-4) each comprise a sleeve-shaped fastening element (119) and an annular sealing element (121),
wherein the respective sleeve-shaped fastening element (119) is connected to the respective opening edge (109) of the valve housing (101) in a form-fitting or force-fitting manner,
wherein the respective sleeve-shaped fastening element (119) is adapted to apply a force to the respective annular sealing element (121) in order to press the respective annular sealing element (121) at the respective opening edge (109) of the valve housing (101) and at the valve piston (111) and to effect a fluidic seal between the valve piston (111) and the respective opening edge (109),
wherein the respective sleeve-shaped fastening element (119) comprises an inner sleeve section (131), which delimits a sleeve opening (133) of the respective sleeve-shaped fastening element (119), and an outer sleeve section (135), which is connected to the respective opening edge (109) of the valve housing (101) in a form-fitting or force-fitting manner, and wherein between the inner sleeve section (131) and the outer sleeve section (135) a receiving area (137) facing the housing interior (103) of the valve housing (101) is arranged, in which receiving area (137) the respective annular sealing element (121) is received at least in sections, **characterized in that**
the respective sealing arrangement (117, 117-1, 117-2, 117-3, 117-4) consists exclusively of the respective sleeve-shaped fastening element (119) and the respective annular sealing element (121), wherein the respective sealing arrangement (117, 117-1, 117-2, 117-3, 117-4) consists exclusively of two components.

2. Fluid valve assembly (100) according to claim 1, wherein the valve housing (101) comprises four housing openings (105, 105-1, 105-2, 105-3, 105-4), wherein the valve piston (111) is adapted to at least partially fluidically block a first subgroup of two housing openings (105, 105-1, 105-2, 105-3, 105-4) of the four housing openings (105, 105-1, 105-2, 105-3, 105-4) and to at least partially fluidically release a second subgroup of two housing openings (105, 105-1, 105-2, 105-3, 105-4) of the four housing openings (105, 105-1, 105-2, 105-3, 105-4) in a first piston position, and wherein the valve piston (111) is adapted to at least partially fluidically block the second subgroup of two housing openings (105, 105-1, 105-2, 105-3, 105-4) of the four housing openings (105, 105-1, 105-2, 105-3, 105-4) and to at least partially fluidically release the first subgroup of two housing openings (105, 105-1, 105-2, 105-3, 105-4) of the four housing openings (105, 105-1, 105-2, 105-3, 105-4) in a second piston position, wherein the fluid valve assembly (100) comprises four sealing arrangements (117, 117-1, 117-2, 117-3, 117-4), which are each arranged in one of the four housing openings (105, 105-1, 105-2, 105-3, 105-4).

3. Fluid valve assembly (100) according to claim 1 or 2, wherein the fluid valve assembly (100) comprises at least two, in particular four, housing sockets (123, 123-1, 123-2, 123-3, 123-4), wherein a respective one of the at least two, in particular four, housing sockets (123, 123-1, 123-2, 123-3, 123-4) is arranged at a respective one of the at least two, in particular four, housing openings (105, 105-1, 105-2, 105-3, 105-4), wherein the respective housing sockets (123, 123-1, 123-2, 123-3, 123-4) are detachably connected, in particular by a force-locking or form-locking connection, to the respective opening edge (109) or wherein the respective housing sockets (123, 123-1, 123-2, 123-3, 123-4) are non-detachably connected to the respective opening edge (109), in particular by a material-bonding connection.

4. Fluid valve assembly (100) according to one of the preceding claims, wherein the force-locking or form-locking connection between the respective sleeve-shaped fastening element (119) of the respective sealing arrangement (117, 117-1, 117-2, 117-3, 117-4) and the respective opening edge (109) of the valve housing (101) comprises a snap-fit connection.

5. Fluid valve assembly (100) according to one of the preceding claims, wherein the respective sleeve-shaped fastening element (119) comprises a sleeve outer side (125), which abuts at an edge inner side (147) of the respective opening edge (109) facing the respective housing opening (105, 105-1, 105-2, 105-3, 105-4), in particular in a form-fitting or force-fitting manner.

6. Fluid valve assembly (100) according to one of the preceding claims, wherein the respective sleeve-shaped fastening element (119), in particular the sleeve outer side (125), comprises at least two snap arms (127), in particular three snap arms (127), which each engage in a snap receptacle (145) of the respective opening edge (109), in particular an edge inner side (147), in order to fasten the respective sleeve-shaped fastening element (119) to the respective opening edge (109) in a force-fitting manner, or
wherein the respective opening edge (109), in particular an inner edge side (147), comprises at least two snap arms (127), in particular three snap arms (127), which each engage in a snap receptacle (145) of the respective sleeve-shaped fastening element (119) in order to fasten the respective sleeve-shaped fastening element (119) to the respective opening edge (109) in a force-fitting manner.

7. Fluid valve assembly (100) according to one of the preceding claims, wherein the respective annular sealing element (121) comprises a first sealing lip (139), which abuts at the respective sleeve-shaped fastening element (119), in particular the outer sleeve section (135), and at the respective opening edge (109), in particular the fastening stop (149), in a sealing manner, and/or wherein the respective annular sealing element (121) comprises a second sealing lip (141), which abuts at the respective sleeve-shaped fastening element (119), in particular the inner sleeve section (131), and the outer sleeve section (135) in a sealing manner, and/or wherein the respective annular sealing element (121) comprises a third sealing lip (143), which abuts at the valve piston (111) in a sealing manner.

8. Fluid valve assembly (100) according to one of the preceding claims, wherein at least one first flow opening (159-1) is formed in the respective sleeve-shaped fastening element (119), in particular in the inner sleeve section (131), and wherein at least one second flow opening (159-2) is formed in the respective sleeve-shaped fastening element (119), in particular in the outer sleeve section (135), wherein the first and second flow openings (159-1, 159-2) fluidically connect a sleeve opening of the sleeve-shaped fastening element (119) to a sealing chamber (161) separated on one side by the respective annular sealing element (121) in order to supply the sealing chamber (161) separated on one side with fluid and to effect a contact force on the respective annular sealing element (121).

9. Fluid valve assembly (100) according to one of the preceding claims, wherein the respective annular sealing element (121) is connected to the respective sleeve-shaped fastening element (119) by a force-fitting and/or form-fitting connection, or wherein the respective annular sealing element (121) is connected to the respective sleeve-shaped fastening element (119) by a material-bonding connection.

10. Fluid valve assembly (100) according to one of the preceding claims, wherein the respective opening edge (109) comprises at least one fastening stop (149), at which the respective annular sealing element (121), in particular the first sealing lip (139), abuts in order to effect a fluidically sealing connection between the respective annular sealing element (121) and the respective opening edge (109) of the valve housing (101).

11. Fluid valve assembly (100) according to one of the preceding claims, wherein the fluid valve assembly (100) comprises a fluid distribution element (163), in particular a fluid distribution plate, comprising at least two, in particular four, fluid channels, wherein the valve housing (101) is fastened at the fluid distribution element (163), and wherein a respective housing opening (105, 105-1, 105-2, 105-3, 105-4) of the valve housing (101) is fluidically connected to a respective fluid channel (165), in particular by a respective housing socket (123, 123-1, 123-2, 123-3, 123-4) of the fluid valve assembly (100).

12. Fluid valve assembly (100) according to claim 11, wherein the respective housing socket (123, 123-1, 123-2, 123-3, 123-4) of the fluid valve assembly (100) is connected to the fluid distribution element (163) in a detachable manner, in particular by a force-locking or form-locking connection, in particular by a snap-in connection or screw connection, or wherein the respective housing socket (123, 123-1, 123-2, 123-3, 123-4) of the fluid valve assembly (100) is connected to the fluid distribution element (163) in a non-detachable manner, in particular by a material-bonding connection.

13. Fluid valve assembly (100) according to claim 11 or 12, wherein the at least two, in particular four, fluid channels (165) are each delimited by a channel housing (173), which extends at an upper side of the fluid distribution element (163), wherein in particular at an upper side of the respective fluid channel (165) a fluid channel opening is formed, which is fluidically connected to a respective housing socket (123, 123-1, 123-2, 123-3, 123-4) of the fluid valve assembly (100).

## Revendications

1. Ensemble vanne à fluide (100) comprenant :
un boîtier de vanne (101) délimitant un espace intérieur (103), le boîtier de vanne (101) comprenant au moins deux ouvertures (105, 105-1, 105-2, 105-3, 105-4) reliant fluidiquement l'espace intérieur (103) à l'extérieur (107) de l'ensemble vanne à fluide (100), chaque ouverture (105, 105-1, 105-2, 105-3, 105-4) étant délimitée par un bord d'ouverture (109) du boîtier de vanne (101),
un piston de soupape (111) disposé de manière rotative à l'intérieur du boîtier (103) et conçu pour bloquer au moins partiellement fluidiquement ou libérer au moins partiellement fluidiquement les au moins deux ouvertures de boîtier (105, 105-1, 105-2, 105-3, 105-4) en fonction de la position du piston de soupape (111), et
au moins deux dispositifs d'étanchéité (117, 117-1, 117-2, 117-3, 117-4), l'un des deux dispositifs d'étanchéité (117, 117-1, 117-2, 117-3, 117-4) étant disposé dans l'une des deux ouvertures de boîtier (105, 105-1, 105-2, 105-3, 105-4),
dans lequel les dispositifs d'étanchéité (117, 117-1, 117-2, 117-3, 117-4) comprennent chacun un élément de fixation en forme de manchon (119) et un élément d'étanchéité annulaire (121),
dans lequel l'élément de fixation respectif en forme de manchon (119) est relié au bord d'ouverture respectif (109) du boîtier de soupape (101) par ajustement de forme ou par ajustement forcé,
dans lequel l'élément de fixation en forme de manchon respectif (119) est adapté pour appliquer une force à l'élément d'étanchéité annulaire respectif (121) afin de presser l'élément d'étanchéité annulaire respectif (121) au niveau du bord d'ouverture respectif (109) du boîtier de soupape (101) et au niveau du piston de soupape (111) et pour réaliser une étanchéité fluidique entre le piston de soupape (111) et le bord d'ouverture respectif (109),
dans lequel l'élément de fixation en forme de manchon (119) comprend une section de manchon intérieure (131) délimitant une ouverture de manchon (133) de l'élément de fixation en forme de manchon (119) et une section de manchon extérieure (135) reliée au bord d'ouverture (109) du boîtier de soupape (101) par complémentarité de forme ou par emmanchement forcé entre les sections de manchon intérieure (131) et extérieure (135) est disposée une zone de réception (137) orientée vers l'intérieur (103) du boîtier de soupape (101), dans laquelle l'élément d'étanchéité annulaire (121) est logé au moins par sections,
dans lequel le dispositif d'étanchéité respectif (117, 117-1, 117-2, 117-3, 117-4) est constitué exclusivement de l'élément de fixation en forme de manchon respectif (119) et de l'élément d'étanchéité annulaire respectif (121), le dispositif d'étanchéité respectif (117, 117-1, 117-2, 117-3, 117-4) étant constitué exclusivement de deux composants.

2. Ensemble vanne à fluide (100) selon la revendication 1, dans lequel le boîtier de vanne (101) comprend quatre ouvertures (105, 105-1, 105-2, 105-3, 105-4), le piston de vanne (111) étant adapté pour obturer fluidiquement au moins partiellement un premier sous-groupe de deux ouvertures (105, 105-1, 105-2, 105-3, 105-4) parmi les quatre ouvertures (105, 105-1, 105-2, 105-3, 105-4) et pour libérer fluidiquement au moins partiellement un second sous-groupe de deux ouvertures (105, 105-1, 105-2, 105-3, 105-4) parmi les quatre ouvertures (105, 105-1, 105-2, 105-3, 105-4) dans une première position de piston, et dans lequel le piston de soupape (111) est adapté pour bloquer fluidiquement au moins partiellement le deuxième sous-groupe de deux ouvertures de boîtier (105, 105-1, 105-2, 105-3, 105-4) des quatre ouvertures de boîtier (105, 105-1, 105-2, 105-3, 105-4) et pour libérer fluidiquement au moins partiellement le premier sous-groupe de deux ouvertures de boîtier (105, 105-1, 105-2, 105-3, 105-4) des quatre ouvertures de boîtier (105, 105-1, 105-2, 105-3, 105-4) dans une seconde position de piston, dans lequel l'ensemble de soupape à fluide (100) comprend quatre dispositifs d'étanchéité (117, 117-1, 117-2, 117-3, 117-4), qui sont chacun disposés dans l'une des quatre ouvertures du boîtier (105, 105-1, 105-2, 105-3, 105-4).

3. Ensemble vanne à fluide (100) selon la revendication 1 ou 2, comprenant au moins deux, voire quatre, logements de boîtier (123, 123-1, 123-2, 123-3, 123-4), chacun des logements de boîtier (123, 123-1, 123-2, 123-3, 123-4) étant disposé au niveau d'une des ouvertures de boîtier (105, 105-1, 105-2, 105-3, 105-4), les logements de boîtier (123, 123-1, 123-2, 123-3, 123-4) sont reliés de manière amovible, notamment par un assemblage par force ou par forme, au bord d'ouverture correspondant (109) ou dans lequel les logements de boîtier respectifs (123, 123-1, 123-2, 123-3, 123-4) sont reliés de manière non détachable au bord d'ouverture respectif (109), en particulier par une liaison par liaison de matériau.

4. Ensemble vanne à fluide (100) selon l'une des revendications précédentes, dans lequel la liaison par verrouillage de force ou par verrouillage de forme entre l'élément de fixation en forme de manchon respectif (119) du dispositif d'étanchéité respectif (117, 117-1, 117-2, 117-3, 117-4) et le bord d'ouverture respectif (109) du boîtier de vanne (101) comprend une liaison par encliquetage.

5. Ensemble vanne à fluide (100) selon l'une des revendications précédentes, dans lequel l'élément de fixation en forme de manchon respectif (119) comprend un côté extérieur de manchon (125), qui vient en butée contre un côté intérieur de bord (147) du bord d'ouverture respectif (109) faisant face à l'ouverture de boîtier respective (105, 105-1, 105-2, 105-3, 105-4), en particulier de manière à s'emboîter ou à forcer.

6. Ensemble vanne à fluide (100) selon l'une des revendications précédentes, dans lequel l'élément de fixation en forme de manchon (119), notamment le côté extérieur (125), comprend au moins deux bras d'encliquetage (127), notamment trois bras d'encliquetage (127), qui s'engagent chacun dans un logement d'encliquetage (145) du bord d'ouverture (109), notamment du côté intérieur (147), afin de fixer l'élément de fixation en forme de manchon (119) au bord d'ouverture (109) par emmanchement forcé, ou
dans lequel le bord d'ouverture respectif (109), en particulier un côté de bord intérieur (147), comprend au moins deux bras d'encliquetage (127), en particulier trois bras d'encliquetage (127), qui s'engagent chacun dans un logement d'encliquetage (145) de l'élément de fixation en forme de manchon respectif (119) afin de fixer l'élément de fixation en forme de manchon respectif (119) au bord d'ouverture respectif (109) de manière à être fixé par ajustement forcé.

7. Ensemble vanne à fluide (100) selon l'une des revendications précédentes, dans lequel l'élément d'étanchéité annulaire (121) comprend une première lèvre d'étanchéité (139) qui s'appuie de manière étanche sur l'élément de fixation en forme de manchon (119), en particulier sur la section de manchon extérieure (135), et sur le bord d'ouverture (109), en particulier sur la butée de fixation (149), et/ou dans lequel l'élément d'étanchéité annulaire (121) comprend une deuxième lèvre d'étanchéité (141) qui s'appuie de manière étanche sur l'élément de fixation en forme de manchon (119), en particulier sur la section de manchon intérieure (131) et sur la section de manchon extérieure (135), et/ou dans lequel l'élément d'étanchéité annulaire (121) comprend une troisième lèvre d'étanchéité (143) qui s'appuie de manière étanche sur le piston de vanne (111).

8. Ensemble vanne à fluide (100) selon l'une des revendications précédentes, dans lequel au moins une première ouverture d'écoulement (159-1) est formée dans l'élément de fixation en forme de manchon (119) respectif, en particulier dans la section de manchon intérieure (131), et dans lequel au moins une deuxième ouverture d'écoulement (159-2) est formée dans l'élément de fixation en forme de manchon (119) respectif, en particulier dans la section de manchon extérieure (135), les première et deuxième ouvertures d'écoulement (159-1, 159-2) reliant fluidiquement une ouverture de manchon de l'élément de fixation en forme de manchon (119) à une chambre d'étanchéité (161) séparée d'un côté par l'élément d'étanchéité annulaire respectif (121) afin d'alimenter en fluide la chambre d'étanchéité (161) séparée d'un côté et d'exercer une force de contact sur l'élément d'étanchéité annulaire respectif (121).

9. Ensemble vanne à fluide (100) selon l'une des revendications précédentes, dans lequel l'élément d'étanchéité annulaire respectif (121) est relié à l'élément de fixation en forme de manchon respectif (119) par une liaison à force et/ou par complémentarité de forme, ou dans lequel l'élément d'étanchéité annulaire respectif (121) est relié à l'élément de fixation en forme de manchon respectif (119) par une liaison par liaison de matière.

10. Ensemble vanne à fluide (100) selon l'une des revendications précédentes, dans lequel le bord d'ouverture respectif (109) comprend au moins une butée de fixation (149), sur laquelle vient en butée l'élément d'étanchéité annulaire respectif (121), en particulier la première lèvre d'étanchéité (139), afin de réaliser une liaison fluidiquement étanche entre l'élément d'étanchéité annulaire respectif (121) et le bord d'ouverture respectif (109) du boîtier de vanne (101).

11. Ensemble vanne à fluide (100) selon l'une des revendications précédentes, dans lequel l'ensemble vanne à fluide (100) comprend un élément de distribution de fluide (163), en particulier une plaque de distribution de fluide, comprenant au moins deux, en particulier quatre, canaux de fluide, dans lequel le boîtier de vanne (101) est fixé à l'élément de distribution de fluide (163), et dans lequel une ouverture de boîtier respective (105, 105-1, 105-2, 105-3, 105-4) du boîtier de vanne (101) est reliée fluidiquement à un canal de fluide respectif (165), en particulier par une douille de boîtier respective (123, 123-1, 123-2, 123-3, 123-4) de l'ensemble vanne à fluide (100).

12. Ensemble vanne à fluide (100) selon la revendication 11, dans lequel le logement de boîtier respectif (123, 123-1, 123-2, 123-3, 123-4) de l'ensemble vanne à fluide (100) est relié à l'élément de distribution de fluide (163) de manière amovible, notamment par une liaison à force ou par verrouillage de forme, notamment par une liaison par encliquetage ou par vissage, ou dans lequel le logement de boîtier respectif (123, 123-1, 123-2, 123-3, 123-4) de l'ensemble vanne à fluide (100) est relié à l'élément de distribution de fluide (163) de manière non amovible, notamment par une liaison par liaison de matière.

13. Ensemble vanne à fluide (100) selon la revendication 11 ou 12, dans lequel les au moins deux, en particulier quatre, canaux de fluide (165) sont chacun délimités par un boîtier de canal (173), qui s'étend sur un côté supérieur de l'élément de distribution de fluide (163), une ouverture de canal de fluide étant formée en particulier sur un côté supérieur du canal de fluide respectif (165), laquelle est reliée fluidiquement à une douille de boîtier respective (123, 123-1, 123-2, 123-3, 123-4) de l'ensemble vanne à fluide (100).
